(19) Europäisches Patentamt / European Patent Office / Office européen des brevets

(11) **EP 4 123 560 A1**

(12) **EUROPEAN PATENT APPLICATION**
published in accordance with Art. 153(4) EPC

(43) Date of publication:
**25.01.2023  Bulletin 2023/04**

(21) Application number: **20925267.5**

(22) Date of filing: **20.07.2020**

(51) International Patent Classification (IPC):
*G06Q 50/10* (2012.01)

(52) Cooperative Patent Classification (CPC):
**G06Q 50/10**

(86) International application number:
**PCT/JP2020/028020**

(87) International publication number:
**WO 2021/186755 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2020  US 202062990678 P**

(71) Applicant: **Sony Group Corporation
Minato-Ku, Tokyo, 108-0075 (JP)**

(72) Inventor: **FURUKAWA, Ryosuke
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57)    The present disclosure relates to an information processing device, an information processing method, and a program that can highly accurately determine, at low cost, whether or not a mobile terminal to be used can provide a service when a service using a mobile terminal is provided.

A missing value indicating a degree of data missing detected by a communication terminal is calculated, and a whitelist is generated in association with a query including a manufacturer, a product, and OS version information of a communication terminal in which the missing value is smaller than a predetermined threshold and the degree of missing is small. When the communication terminal requests service provision based on data detected by the communication terminal, a query is searched for in a whitelist to determine whether or not service provision is possible. The present disclosure can be applied to a system that provides a service based on a detection result of a sensor mounted on a smartphone.

FIG. 8

**Description**

TECHNICAL FIELD

The present disclosure relates to an information processing device, an information processing method, and a program, and more particularly, relates to an information processing device, an information processing method, and a program that can highly accurately determine, at low cost, whether or not a mobile terminal to be used can provide a service when a service using a mobile terminal is provided.

BACKGROUND ART

A technology for providing a specific service by using a detection result of a sensor mounted on a mobile communication terminal typified by a smartphone has been proposed.

For example, services provided by automobile insurance companies include a discount service of a premium according to a drive state of a driver during driving detected by various sensors built in a smartphone possessed by the driver who is a policyholder.

That is, it is a service and the like of discounting the premium because, on the basis of the detection result of the sensor of a smartphone possessed by a policyholder who is a driver, in a case where it is recognized that the driver who is a policyholder usually drives gently, the occurrence rate of an accident is expected to be lower than that of others.

As a technology for achieving such service provision, a technology of classifying a behavior pattern of a user who possesses a mobile terminal on the basis of a detection result of a sensor built in a mobile terminal such as a smartphone has been proposed (see Patent Document 1).

CITATION LIST

PATENT DOCUMENT

Patent Document 1: WO 2014/136466 A

SUMMARY OF THE INVENTION

PROBLEMS TO BE SOLVED BY THE INVENTION

However, since there are an infinite number of manufacturers, products, types of OS, and the like in mobile terminals typified by smartphones, and the configurations of hardware such as sensors and processors mounted in those mobile terminals are different, detection results are sometimes not appropriately acquired.

For example, in a case where a mobile terminal has a processor whose processing capacity is higher than a predetermined processing capacity, a detection result can be obtained at a predetermined frequency, but in a case where a mobile terminal has a processor whose processing capacity is lower than a predetermined processing capacity, a detection result cannot be obtained at a predetermined frequency, and a missing state may occur.

Due to occurrence of this missing state, the behavior pattern of the user cannot be appropriately recognized, and for example, in the case of a discount service of a premium, there is a possibility that the discount service of the premium cannot be received because the usual driving of the policyholder is not appropriately recognized although the usual driving of the policyholder is basically gentle.

That is, depending on a manufacturer, a product, and a type of OS of a mobile terminal possessed by the user, a missing state may occur, and a detection result sufficient to recognize the behavior of the user who possesses the mobile terminal cannot be obtained, and therefore, there is a possibility that appropriate service provision cannot be achieved.

The present disclosure has been made in view of such a situation, and in particular, it is to highly accurately determine, at low cost, whether or not a mobile terminal to be used can provide a service when a service using a mobile terminal is provided.

SOLUTIONS TO PROBLEMS

An information processing device and a program according to one aspect of the present disclosure are an information processing device and a program including: a missing value generation portion that generates a missing value that indicates a degree of data missing detected by a communication terminal; and a list generation portion that generates, on the basis of the missing value, a list of the communication terminal that can perform processing based on data detected by the communication terminal.

An information processing method according to one aspect of the present disclosure is an information processing method including steps of generating a missing value that indicates a degree of data missing detected by a communication terminal, and generating, on the basis of the missing value, a list of the communication terminal that can perform processing based on data detected by the communication terminal.

In one aspect of the present disclosure, a missing value that indicates a degree of data missing detected by a communication terminal is generated, and, a list of the communication terminal that can perform processing based on data detected by the communication terminal is generated on the basis of the missing value.

BRIEF DESCRIPTION OF DRAWINGS

Fig. 1 is a view explaining a discount service of a premium of automobile insurance.
Fig. 2 is a view explaining an example of a detection result by an acceleration sensor.
Fig. 3 is a view explaining a Forbidden signal.
Fig. 4 is a view explaining a configuration example of an information processing system of the present disclosure.
Fig. 5 is a view explaining a configuration example of a data collection terminal.
Fig. 6 is a view explaining a configuration example of a server.
Fig. 7 is a view explaining a configuration example of a service enjoying terminal.
Fig. 8 is a view explaining functions achieved by the information processing system of Fig. 4.
Fig. 9 is a view explaining an example of interpolation processing of a detection result by the acceleration sensor.
Fig. 10 is a view explaining an allowable missing histogram.
Fig. 11 is a view explaining a standardized allowable missing histogram and a weight coefficient.
Fig. 12 is a view explaining an allowable missing value.
Fig. 13 is a view explaining an example of a whitelist.
Fig. 14 is a flowchart explaining whitelist generation processing.
Fig. 15 is a flowchart explaining service provision processing.
Fig. 16 is a view explaining a configuration example of a general-purpose personal computer.

MODE FOR CARRYING OUT THE INVENTION

A preferred embodiment of the present disclosure will be described below in detail with reference to the accompanying drawings. Note that in the present description and drawings, configuration elements having substantially the same function configuration are given the same reference signs, and thus redundant description will be omitted.
Modes for carrying out the present technology will be described below. The description will be given in the following order.

1. Overview of Present Disclosure
2. Preferred Embodiment
3. Example of Causing Software to Execute

<<1. Overview of Present Disclosure>>

The present disclosure is to highly accurately determine, at low cost, whether or not a mobile terminal to be used can provide a service when a service using a mobile terminal is provided.
Here, as an example of a service provided using a mobile terminal, a discount service of a premium according to a driving pattern of a driver to be recognized on the basis of detection results detected by various sensors of a mobile terminal of a driver who is a policyholder, the service provided by an automobile insurance company, will be described.
The premium of general automobile insurance is set on the basis of the probability of occurrence of a general accident.
However, the probability of occurrence of an accident is not necessarily the same due to the driving pattern (driving habit) of the driver who is a policyholder.
That is, it is expected from the driving pattern of the driver that, in a case where the usual driving is strict in traffic rules, the probability of occurrence of an accident of the driver is lower than the probability of occurrence of a general accident.
Furthermore, it is expected from the driving pattern of the driver that, in a case where the usual driving does not deviate from the traffic rules but has frequent sudden starts, sudden brakes, and the like, the probability of occurrence of an accident of the driver is higher than the probability of occurrence of a general accident.

Therefore, since it is expected that, in a case where the driver's usual driving pattern is strict in traffic rules, the probability of occurrence of an accident of the driver is lower than the probability of occurrence of a general accident, the premium for the driver should be set lower than a general premium.

A discount service of a premium of automobile insurance is a service set in view of such a situation, and is a service in which the driving pattern of a driver is detected, and in a case where usual driving is strict in traffic rules, it is predicted that the probability of occurrence of the driver is lower than the probability of occurrence of a general accident, and therefore, a corresponding predetermined amount of money is discounted from a general premium.

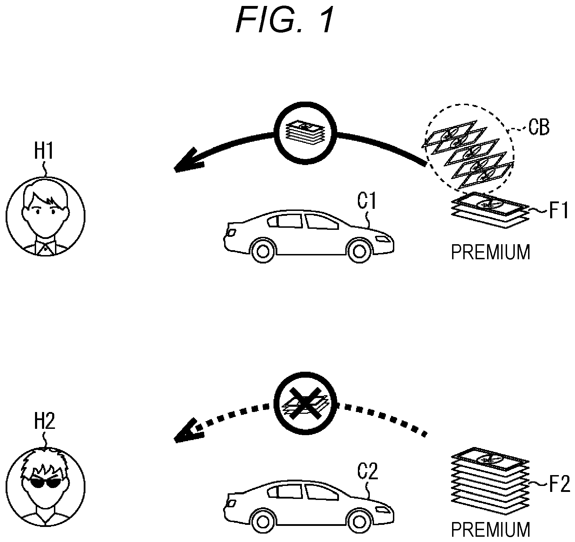

That is, as illustrated in Fig. 1, for a driver H2, who is a policyholder who owns a vehicle C2 and whose usual driving does not deviate from the traffic rules but has frequent sudden starts, sudden brakes, and the like, a general premium F2 is charged.

On the other hand, for a driver H1, who is a policyholder who owns a vehicle C1 and whose usual driving sufficiently complies with traffic rules, a cashback CB corresponding to a predetermined amount of money is given from the general premium F2, and a premium F1, which is substantially discounted from the premium F2, is charged.

This is the discount service of a premium provided by using detection results of various sensors built in the mobile terminal of the driver, the service provided by the automobile insurance companies.

Here, in order to achieve the discount service of a premium of automobile insurance, it is necessary to detect the driving pattern of the driver who is a policyholder.

Detection methods of the driving pattern of the driver include a method of providing a dedicated acceleration sensor or obtaining the driving pattern from displacement of the self-position in a car navigation system.

Here, in a case where a dedicated acceleration sensor or a car navigation system is used, the device cost becomes high in both cases, and there is a concern that the target vehicle type is limited for the car navigation system or the like.

Therefore, in recent years, since communication terminals such as smartphones have become widespread, it has been proposed to register a smartphone owned by each driver and use detection results of various sensors such as an acceleration sensor, a gyro sensor, or a GPS sensor provided in the registered smartphone.

However, there is a case where the smartphones vary in terms of the hardware configuration such as a manufacturer, a product, a model, and a type of a mounted sensor, an operating system (OS) type and version, and the like, and a processing capacity varies depending on each condition, and therefore an appropriate detection result is sometimes not stably obtained.

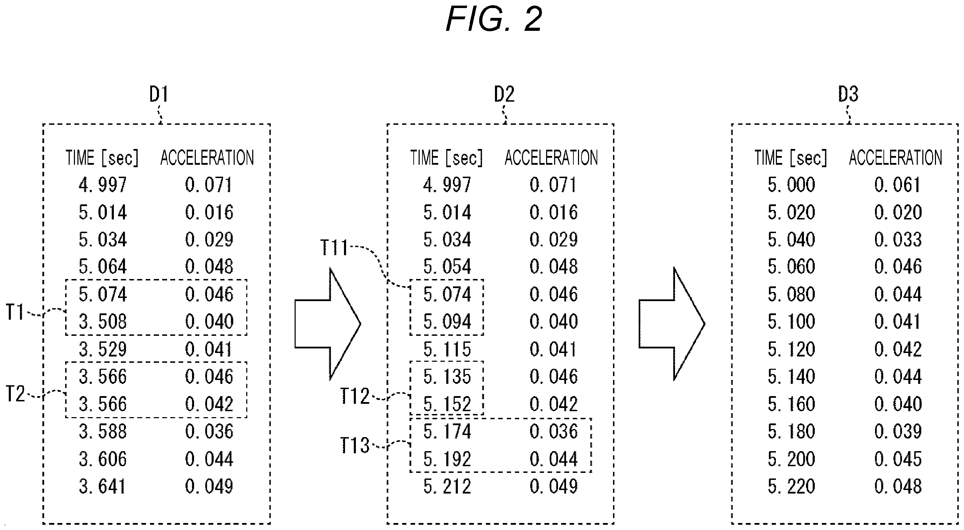

For example, in a case of a configuration in which a smartphone is provided with an acceleration sensor and a detection operation is performed at 50 Hz, that is, in a case of a configuration in which acceleration is detected at intervals of 0.02 sec, a detection result D1 as illustrated in the left part of Fig. 2 is sometimes obtained.

The detection result D1 indicates detection time in order from the top on the left side, and indicates acceleration detected at the corresponding time on the right side.

More specifically, in the detection result D1, from the top, 0.071 is detected as the acceleration at the time 4.997, 0.016 is detected as the acceleration at the time 5.014, 0.029 is detected as the acceleration at the time 5.034, and 0.048 is detected as the acceleration at the time 5.064.

Furthermore, 0.046 is detected as the acceleration at the time 5.074, 0.040 is detected as the acceleration at the time 3.508, and 0.041 is detected as the acceleration at the time 3.529.

Moreover, 0.046 and 0.042 are detected as accelerations at time 3.566, 0.036 is detected as accelerations at time 3.588, 0.044 is detected as accelerations at time 3.606, and 0.049 is detected as accelerations at time 3.641.

Here, in data T1 enclosed by a dotted line, the time next to the time 5.074 is the time 3.508, which is not at an interval of 0.02 seconds. This is a gap caused by the GPS sensor re-acquiring and correcting time information on the basis of a signal from a satellite, changing Japan time to another country time, or the like at the timing next to the time 5.074, for example.

As a result, as indicated by the data T1, the time interval between the time 5.074 and the time 3.508 does not become 0.02 sec but equal to or greater than 1.4 seconds, and the data cannot be handled as appropriate data.

Furthermore, in data T2 enclosed by a dotted line, detection results of two accelerations of 0.046 and 0.042 are acquired at the same time 3.566.

This is because, for example, the processing load of the processor increases, and reading of the detection result of the acceleration accumulated in the memory is delayed, and two are output at the same timing, and the like.

As a result, also the data T2 cannot be handled as appropriate data.

Therefore, the data output from a smartphone is subjected to data cleansing as in a detection result D2 indicated in the center part of Fig. 2, for example.

That is, in the detection result D2, data cleansing is performed by setting the time interval of the data T1 to 0.02 sec and correcting the subsequent time.

That is, in data T11 enclosed by a dotted line, corresponding to the data T1, the time next to the time 5.074 is from the time 3.508 to the time 5.094, and is at an interval of 0.02 seconds, and thereafter, also at an interval of 0.02 seconds.

However, also in the case of the detection result D2, in data T12 corresponding to the data T2 of the detection result D1, the time next to the time 5.135 is the time 5.152 and the time interval is 0.017, the time next to the time 5.152 is the time 5.174 and the time interval is 0.022 as indicated by data T13, and moreover, the time next to the time 5.174 is the time 5.192 and the time interval is 0.018, and the time interval is not corrected to 0.02 sec.

This is a gap caused by jitter generated by acquiring time information via the OS.

Therefore, the detection result D2 is moreover subjected to data cleansing as in a detection result D3 by correcting the time information so as to have an interval of 0.02 sec with the time 5.000 as a start point and interpolating the corresponding acceleration.

In the detection result by the sensor provided in the smartphone as described above, the time interval to be acquired is sometimes not necessarily appropriate, and various corrections are required.

However, some services and algorithms required according to the services require real-time processing for processing using the detection result of the sensor. However, the value calculated by data cleansing is merely an estimation value estimated from preceding and subsequent information, and in particular, in a case where the missing period is long, the estimation value calculated by the data cleansing is a value with low reliability. Therefore, it is necessary to avoid use of the detection result of a product in which the missing period frequently occurs.

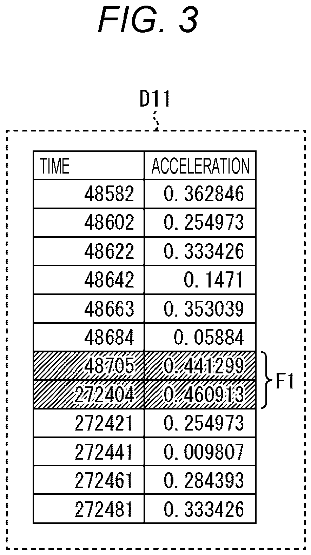

Therefore, for example, in a case where a detection result D11 of acceleration as illustrated in Fig. 3 is obtained, for data F1 where there is a difference in time interval, a Forbidden signal is generated and the data F1 is not used in the subsequent processing.

In the detection result D11 in Fig. 3, from the top, 0.362846 is detected as the acceleration at the time 48.582, 0.254973 is detected as the acceleration at the time 48.602, 0.333426 is detected as the acceleration at the time 48.622, 0.1471 is detected as the acceleration at the time 48.642, 0.353039 is detected as the acceleration at the time 48.663, and 0.05884 is detected as the acceleration at the time 48.684.

Furthermore, 0.441299 is detected as the acceleration at the time 48.705, 0.460913 is detected as the acceleration at the time 272.404, 0.254973 is detected as the acceleration at the time 272.421, 0.009807 is detected as the acceleration at the time 272.441, 0.284393 is detected as the acceleration at the time 272.461, and 0.333426 is detected as the acceleration at the time 272.481.

Among them, in the data F1, the time next to the time 48.705 is the time 272.404, and the time interval is not 0.02 sec. In such case, data cleansing can be performed by interpolation, but as long as it is an interpolation result, data reliability is deteriorated with a missing for equal to or greater than a predetermined time.

For this reason, as in this data F1, in a case where the time when the data missing occurs is longer than a predetermined time, a Forbidden signal is given so as not to be used for processing.

Still, when the data given the Forbidden signal occurs at equal to or greater than a predetermined frequency, an application program cannot achieve appropriate processing, and as a result, provision of a service using the detection result of the sensor provided in the smartphone cannot be implemented.

Therefore, it is necessary to determine whether or not the smartphone can provide the service by an application program on the basis of the occurrence frequency of Forbidden signal at the timing when the application program is installed and provision of the service is requested.

However, since it is necessary to measure the occurrence frequency of Forbidden signal in a predetermined drive time, it is not possible to immediately grasp the occurrence frequency of Forbidden signal at the timing when service provision is requested.

Therefore, in the present disclosure, for each query that is a combination of the manufacturer, the product, and the model of the smartphone, the model number of the sensor, and the type of OS and the OS version, the occurrence frequency of Forbidden signal is registered as a list together with information indicating whether or not service provision is possible in advance on the basis of a missing state in which data longer than a predetermined time is missing, and the list is searched for a corresponding query at a timing when the service provision is requested, thereby determining whether or not the smartphone can provide the service.

Therefore, when the user requests the provision of the service, it is possible to immediately and highly accurately determine and notify whether or not the smartphone can provide the service.

As a result, when the service is provided, it is possible to appropriately acquire the detection result of the sensor built in the smartphone possessed by the user, so that it is possible to achieve provision of an appropriate service.

Furthermore, when service provision is requested and if appropriate service cannot be provided according to the product of the smartphone or the like, it is possible to notify that appropriate service provision cannot be performed at a stage before providing the service, and therefore, it becomes possible to suppress in advance a situation in which the detection result by the sensor of the smartphone cannot be appropriately acquired and appropriate service cannot be provided.

Moreover, since it becomes possible to suppress the occurrence of complaints from the user due to the fact that the detection result by the sensor of the smartphone cannot be appropriately acquired and the service provision cannot be appropriately performed, it becomes possible to reduce the cost related to the complaints handling of the service provision.

<<2. Preferred Embodiment>>

<Configuration Example of Information Processing System>

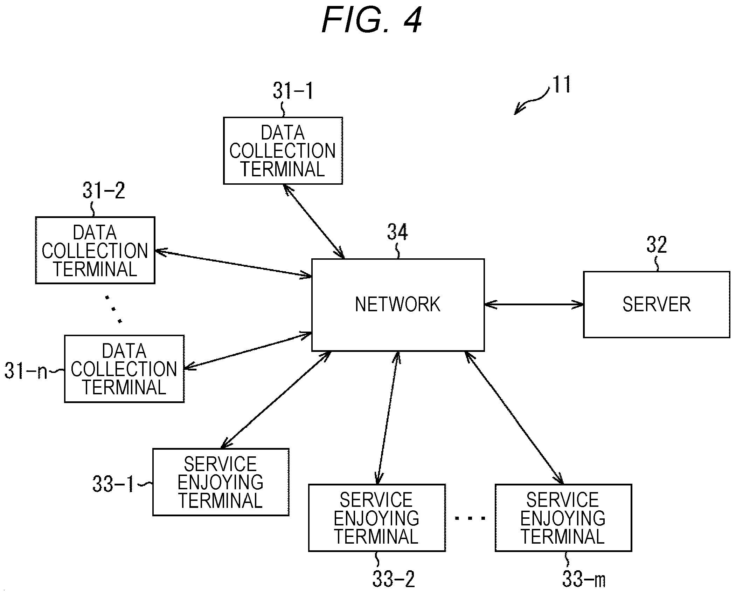

Next, a configuration example of an information processing system to which the technology of the present disclosure is applied will be described with reference to the block diagram of Fig. 4.

An information processing system 11 in Fig. 4 will be described for a case of providing a discount service of a premium of automobile insurance, but may be configured to provide another service as long as it is a service provided on the basis of information detected by the sensor of the mobile terminal.

The information processing system 11 in Fig. 4 includes data collection terminals 31-1 to 31-n, a server 32, and service enjoying terminals 33-1 to 33-m. The data collection terminals 31-1 to 31-n, the server 32, and the service enjoying terminals 33-1 to 33-m have a configuration of being electrically connected by a network 34 typified by the Internet and capable of communicating with one another.

Note that the data collection terminals 31-1 to 31-n and the service enjoying terminals 33-1 to 33-m are simply referred to as the data collection terminal 31 and the service enjoying terminal 33 in a case where it is not particularly necessary to distinguish them.

Furthermore, the data collection terminals 31-1 to 31-n and the service enjoying terminals 33-1 to 33-m are so-called smartphones or the like basically having the same functions, and are mobile communication terminals that include a variety in terms of the manufacturer, the product, the model, and the sensor model, the type of OS, and the OS version.

Note that, in the present embodiment, it is assumed that the data collection terminal 31 is a communication terminal not used for providing the above-described discount service of the premium, and the service enjoying terminal 33 is a communication terminal used for providing the above-described discount service of the premium.

The data collection terminal 31 has various types of built-in sensors, and detects various types of information for recognizing a behavior of the possessing user, in this example, the driving pattern (drive state) when the possessing user drives the automobile.

The sensors built in the data collection terminal 31 are, for example, an acceleration sensor, a gyro sensor, a geomagnetic sensor, an atmospheric pressure sensor, a microphone, a light amount sensor, a motion detector, and a position sensor (for example, a GPS sensor), but is not limited thereto, and also includes other sensors.

Note that, in the present embodiment, the description will be given on the assumption that the data collection terminal 31 includes an acceleration sensor, a gyro sensor, and a position sensor in order to detect the drive state of the driver, but the present invention is not limited thereto.

Using various sensors, the data collection terminal 31 detects, at predetermined time intervals, various detection results used to recognize the drive state when the possessing user drives an automobile, and generates information indicating the degree of data missing occurring when the above-described Forbidden signal is detected.

More specifically, the data collection terminal 31 obtains, as information indicating the degree of data missing, an allowable missing histogram including a missing time, which is a time when the data in the detection result of the sensor is missing and the number of times of occurrence for each missing time.

Then, the data collection terminal 31 associates and outputs, to the server 32 together with the continuous drive time related to the measurement of the allowable missing histogram, terminal information including information on the manufacturer name of its manufacturer, the product name, the model name, the model number of the sensor, the type of OS, and the OS version with the allowable missing histogram.

The server 32 is a server computer managed and operated by the automobile insurance company, and acquires the allowable missing histogram and the continuous drive time that are supplied from the data collection terminals 31-1 to 31-n via the network 34.

Furthermore, the server 32 forms and accumulates, in association with the allowable missing histogram and the continuous drive time, a query for each combination of the manufacturer name, the product name, the model name, and the model number (hereinafter, simply sensor model number) of the built-in sensor that are associated with the allowable missing histogram and the continuous drive time, and the type of OS and the OS version.

Moreover, the server 32 generates, on the basis of the allowable missing histogram and the continuous drive time, an allowable missing value obtained by scalarizing the degree of data missing, determines, on the basis of the allowable missing value, whether or not to be possible to provide a discount service, and generates a list of the determination result for each query as a whitelist.

The service enjoying terminal 33 is a mobile terminal carried by the policyholder of the automobile insurance described above, and, when requesting provision of the discount service of the premium of its own, accesses the server 32 and requests the provision of the discount service of the premium together with information on its own manufacturer name, the product name, the model name, the sensor model number, the type of OS, and the OS version.

When requested by the service enjoying terminal 33 for provision of the discount service of the premium, the server 32 searches the whitelist for a query corresponding to combination of information on the manufacturer name, the product name, the model name, the sensor model number, the type of OS, and the OS version of the service enjoying terminal 33 to be supplied, and determines whether or not to be possible to provide the discount service of the premium on the basis of information related to availability of service registered in association with the searched query.

In a case where the query corresponding to combination of information on the manufacturer name, the product name, the model name, the sensor model number, the type of OS, and the OS version of the service enjoying terminal 33 to be supplied that requests the provision of the discount service of the premium is registered in the whitelist, and information that the discount service can be provided is registered, the server 32 regards that the discount service of the premium can be provided, accepts the request for the service provision, and notifies the service enjoying terminal 33 that has requested the provision of the discount service of the premium that the discount service can be provided.

When the provision of the service is accepted, the service enjoying terminal 33 detects, at predetermined time intervals, and supplies, to the server 32, various detection results for recognizing the drive state of the user who is a policyholder, such as an acceleration sensor, a gyro sensor, and a GPS sensor that are built in.

On the basis of the detection result supplied from the service enjoying terminal 33, the server 32 recognizes the drive state of the policyholder who possesses the service enjoying terminal 33, calculates a discount amount of the premium according to the recognition result, and provides the discount service of the premium such as cashback.

In such case, the policyholder who possesses the service enjoying terminal 33 can enjoy the discount service of the premium according to the drive state.

On the other hand, in a case where the query corresponding to combination of information on the manufacturer name, the product name, the model name, the sensor model number, the type of OS, and the OS version of the service enjoying terminal 33 to be supplied that requests the provision of the discount service of the premium is not searched from the whitelist (alternatively, in a case where it is searched from the whitelist but disabled service provision is registered), the server 32 regards, from the detection result supplied from the service enjoying terminal 33 that requests the provision of the discount service of the premium, that it is impossible to appropriately detect the drive state of the owner of the service enjoying terminal 33 who is a policyholder, does not accept the request for the service provision, and notifies the service enjoying terminal 33 that it is impossible to provide the discount service of the premium.

In this case, the policyholder who possesses the service enjoying terminal 33 becomes impossible to receive the provision of the discount service of the premium according to the drive state.

That is, by the series of processing of the information processing system 11 in Fig. 4, on the basis of the detection results supplied from the plurality of data collection terminals 31-1 to 31-n, an allowable missing value is obtained for each query corresponding to combination of the manufacturer name, the product name, the model name, and a sensor model number, and a type of OS and an OS version, and a query that is lower than a predetermined allowable missing value, that is, specifies a smartphone that can supply, to the server 32, a detection result that can appropriately detect the drive state by being possessed by the policyholder at the time of driving, among the data collection terminals 31-1 to 31-n, is registered in the whitelist.

Therefore, when provision of the discount service is requested, it is immediately determined whether or not the discount service can be provided on the basis of whether or not the query corresponding to combination of the manufacturer name, the product name, the model name, the sensor model number, the type of OS, and the OS version of the smartphone requesting the provision of the discount service is registered in the whitelist as a query that can provide the discount service.

As a result, in the information processing system 11 in Fig. 4, each of the plurality of data collection terminals 31 has various built-in sensors, generates an allowable missing histogram as information indicating the degree of data missing in the detection result, and transmits it to the server 32 together with terminal information including the manufacturer name, the product name, the model name, the sensor model number, the type of OS, and the OS version of its own, and information on continuous drive time.

The server 32 statistically processes the allowable missing histogram and the continuous drive time supplied from the data collection terminal 31 for each query corresponding to the terminal information to obtain the allowable missing value, and, by comparing the allowable missing value with a threshold, generates a whitelist for specifying a query corresponding to the terminal information including the manufacturer name, the product name, the model name, the sensor model number, the type of OS, and the OS version that can acquire a detection result necessary for achieving the discount service of the premium.

Then, in a case where the service enjoying terminal 33 requests provision of a discount service, the server 32 searches the whitelist for a query corresponding to the terminal information including the manufacturer name, the product name, the model name, the sensor model number, the type of OS, and the OS version of the service enjoying terminal 33 for which provision of the discount service is requested, determines whether or not the service can be provided on the basis of whether or not the query is searched as a query that can provide the service, and notifies the service enjoying terminal 33 of the determination result.

Here, in a case of being searched from the whitelist as a query capable of providing the discount service, the service enjoying terminal 33 can receive the provision of the discount service of the premium on the basis of its own detection result.

That is, in the information processing system 11 in Fig. 4, on the basis of the information supplied from the data collection terminal 31, the server 32 generates in advance a whitelist indicating the determination result as to whether or not to be possible to provide the discount service of the premium for each query corresponding to terminal information including combination of information on the manufacturer name, the product name, the model name, the sensor model number, the type of OS, and the OS version.

Then, in the server 32, when the service enjoying terminal 33 requests provision of the discount service of the premium, a query corresponding to the terminal information including combination of information on the manufacturer name, the product name, the model name, the sensor model number, the type of OS, and the OS version is searched from the whitelist generated in advance, and it is determined whether or not the discount service of the premium can be provided on the basis of a search result.

Therefore, when the service enjoying terminal 33, which requests provision of a discount service of a premium, requests the provision of the discount service of the premium, the server 32 searches the terminal information on the service enjoying terminal 33 on the basis of the whitelist, so that it becomes possible to immediately determine whether or not to be possible to provide the discount service of the premium.

<Configuration Example of Data Collection Terminal>

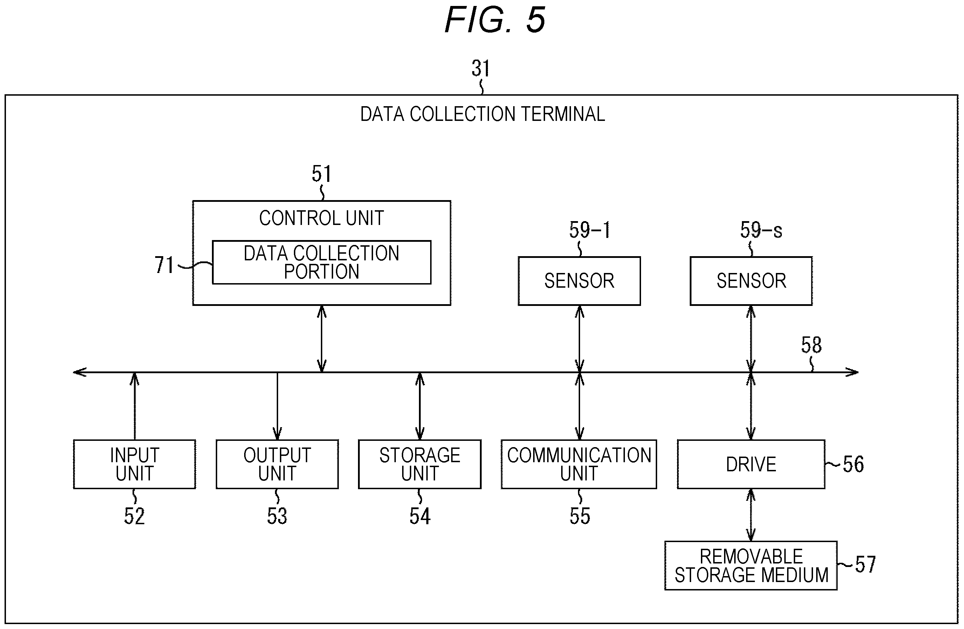

Next, a configuration example of the data collection terminal 31 will be described with reference to Fig. 5.

The data collection terminal 31 includes a control unit 51, an input unit 52, an output unit 53, a storage unit 54, a communication unit 55, a drive 56, a removable storage medium 57, and sensors 59-1 to 59-s, which are connected to one another via a bus 58, and can transmit and receive data and programs.

The control unit 51 includes a processor and a memory, and controls the entire operation of the data collection terminal 31. Furthermore, the control unit 51 includes a data collection portion 71.

The data collection portion 71 acquires detection results of the sensors 59-1 to 59-s in the data collection terminal 31 in association with the detection time, obtains the allowable missing histogram, and detects the continuous drive time.

Then, the data collection portion 71 transmits the allowable missing histogram and the continuous drive time to the server 32 together with the terminal information including the manufacturer name, the product name, the model name, and the sensor model number, the type of OS, and the OS version, which are terminal information. Note that details of the allowable missing histogram will be described later.

The input unit 52 includes an input device such as a keyboard, a button, and a mouse with which the user inputs an operation command, and supplies various input signals to the control unit 51.

The output unit 53 is controlled by the control unit 51, and outputs and displays a supplied operation screen and an image of a processing result to a display device including a liquid crystal display (LCD) or an organic electro luminescence (EL).

The storage unit 54 includes a hard disk drive (HDD), a solid state drive (SSD), or a semiconductor memory, is controlled by the control unit 51, and writes or reads various data and programs including content data.

The communication unit 55 is controlled by the control unit 51, and transmits and receives various data and programs to and from various devices via a communication network typified by a local area network (LAN) or the like in a wired (or wireless (not illustrated)) manner.

The drive 56 reads and writes data from and to the removable storage medium 57 such as a magnetic disk (including a flexible disk), an optical disk (including a compact disc-read only memory (CD-ROM) and a digital versatile disc (DVD)), a magneto-optical disk (including a mini disc (MD)), or a semiconductor memory.

The sensors 59-1 to 59-s are a plurality of built-in sensor groups, and are, for example, acceleration sensors, gyro sensors, geomagnetic sensors, atmospheric pressure sensors, microphones, light amount sensors, motion detectors, position sensors (for example, GPS sensors), and the like, and detect and output, to the control unit 51, various types of information.

<Configuration Example of Server>

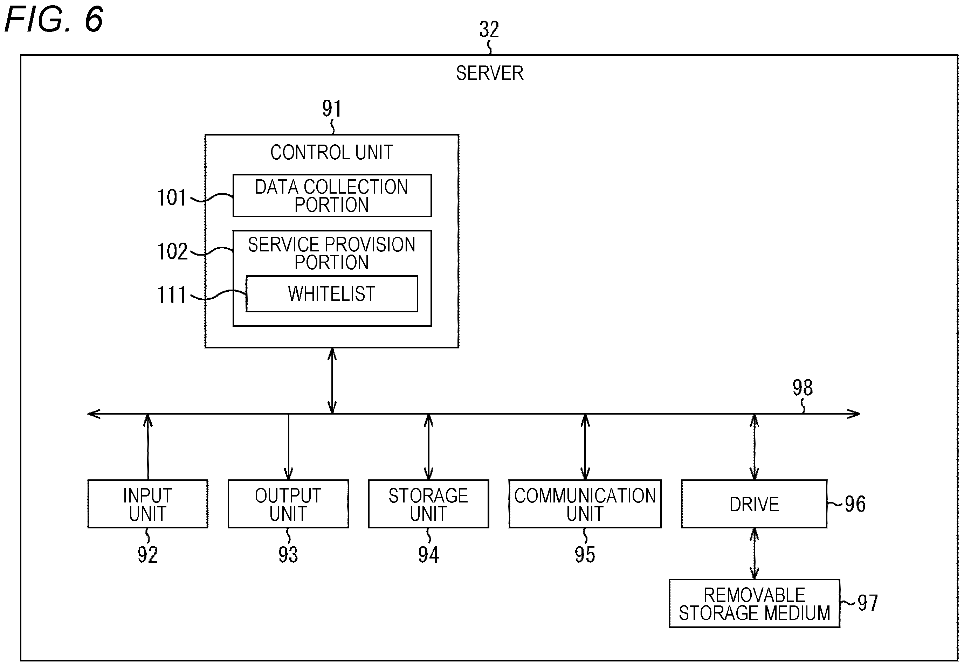

Next, a configuration example of the server 32 will be described with reference to Fig. 6.

The server 32 includes a control unit 91, an input unit 92, an output unit 93, a storage unit 94, a communication unit 95, a drive 96, and a removable storage medium 97, which are connected to one another via a bus 98, and can transmit and receive data and programs.

The control unit 91 includes a processor and a memory, and controls the entire operation of the server 32. Furthermore, the control unit 91 includes a data collection portion 101 and a service provision portion 102.

The data collection portion 101 acquires, in association with the terminal information, information on the allowable missing histogram and the continuous drive time supplied from the data collection terminal 31. The data collection portion 101 generates a standardized allowable missing histogram on the basis of the allowable missing histogram and the continuous drive time, and outputs the standardized allowable missing histogram to the service provision portion 102 in association with the query according to the terminal information.

The service provision portion 102 obtains the allowable missing value on the basis of the standardized allowable missing histogram supplied from the data collection portion 101, determines whether or not to be possible to provide the discount service by comparing with the threshold of the allowable missing value, and generates and stores a whitelist 111 including the determination result and the query corresponding to the terminal information.

Furthermore, when there is a request for provision of the discount service together with the terminal information from the service enjoying terminal 33, the service provision portion 102 searches the whitelist for a query corresponding to the terminal information, determines whether or not to be possible to provide the discount service on the basis of whether or not the query is registered in the whitelist as a query capable of providing a discount service, and notifies the service enjoying terminal 33 of the determination result.

In a case where the discount service can be provided, the service provision portion 102 recognizes the drive state on the basis of various detection results notified by the data collection portion 101, and provides the discount service of the premium according to the recognition result.

The input unit 92 includes an input device such as a keyboard and a mouse with which the user inputs an operation command, and supplies various input signals to the control unit 91.

The output unit 93 is controlled by the control unit 91, and outputs and displays a supplied operation screen and an image of a processing result to a display device including a liquid crystal display (LCD) or an organic electro luminescence (EL).

The storage unit 94 includes a hard disk drive (HDD), a solid state drive (SSD), or a semiconductor memory, is controlled by the control unit 91, and writes or reads various data and programs including content data.

The communication unit 95 is controlled by the control unit 91, and transmits and receives various data and programs to and from various devices via a communication network typified by a local area network (LAN) or the like in a wired (or wireless (not illustrated)) manner.

The drive 96 reads and writes data from and to the removable storage medium 97 such as a magnetic disk (including a flexible disk), an optical disk (including a compact disc-read only memory (CD-ROM) and a digital versatile disc (DVD)), a magneto-optical disk (including a mini disc (MD)), or a semiconductor memory.

<Configuration Example of Service Enjoying Terminal>

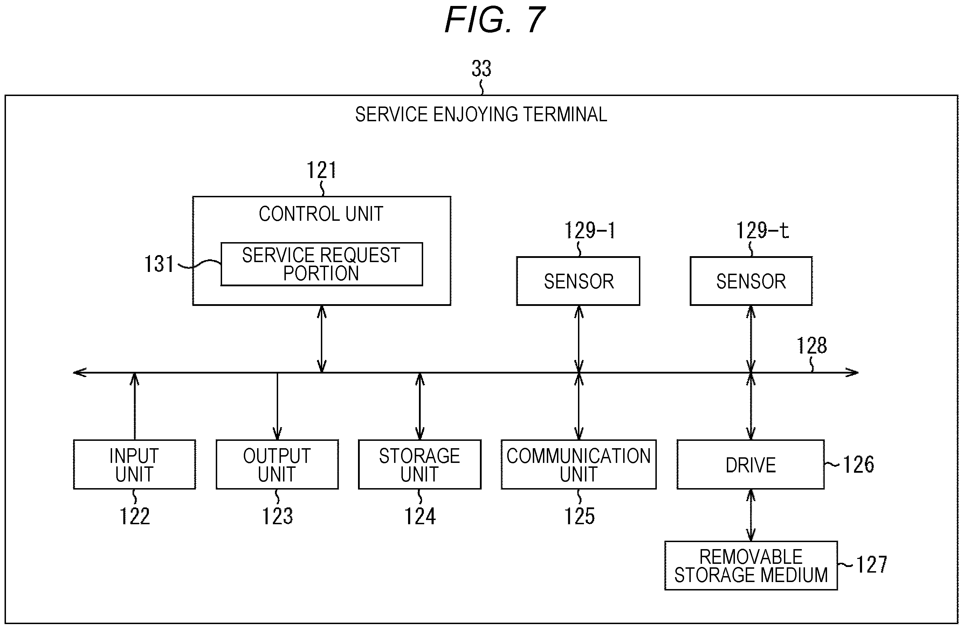

Next, a configuration example of the service enjoying terminal 33 will be described with reference to Fig. 7.

The service enjoying terminal 33 includes a control unit 121, an input unit 122, an output unit 123, a storage unit 124, a communication unit 125, a drive 126, a removable storage medium 127, and sensors 129-1 to 129-t, which are connected to one another via a bus 128, and can transmit and receive data and programs.

Note that the configuration of the service enjoying terminal 33 is basically similar to that of the data collection terminal 31, and the control unit 121, the input unit 122, the output unit 123, the storage unit 124, the communication unit 125, the drive 126, the removable storage medium 127, and the sensors 129-1 to 129-t correspond to the control unit 51, the input unit 52, the output unit 53, the storage unit 54, the communication unit 55, the drive 56, the removable storage medium 57, and the sensors 59-1 to 59-s, respectively, and therefore detailed description will be omitted.

However, the control unit 121 includes a service request portion 131 instead of the data collection portion 71 in the control unit 51.

The service request portion 131 acquires and supplies, to the server 32, the detection results of the sensors 129-1 to 129-t in the service enjoying terminal 33 in association with the detection time, and enjoys the provision of the discount service based on the detection results.

In enjoying the provision of this discount service, the service request portion 131 acquires terminal information and requests the server 32 to provide the service. The server 32 determines whether or not service provision is possible on the basis of the terminal information, and the information related to whether or not to be possible to provide the service is notified, and therefore, when notified that the service provision is possible, the service request portion 131 makes it possible to receive provision of the discount service of the premium.

<Function Achieved by Information Processing System>

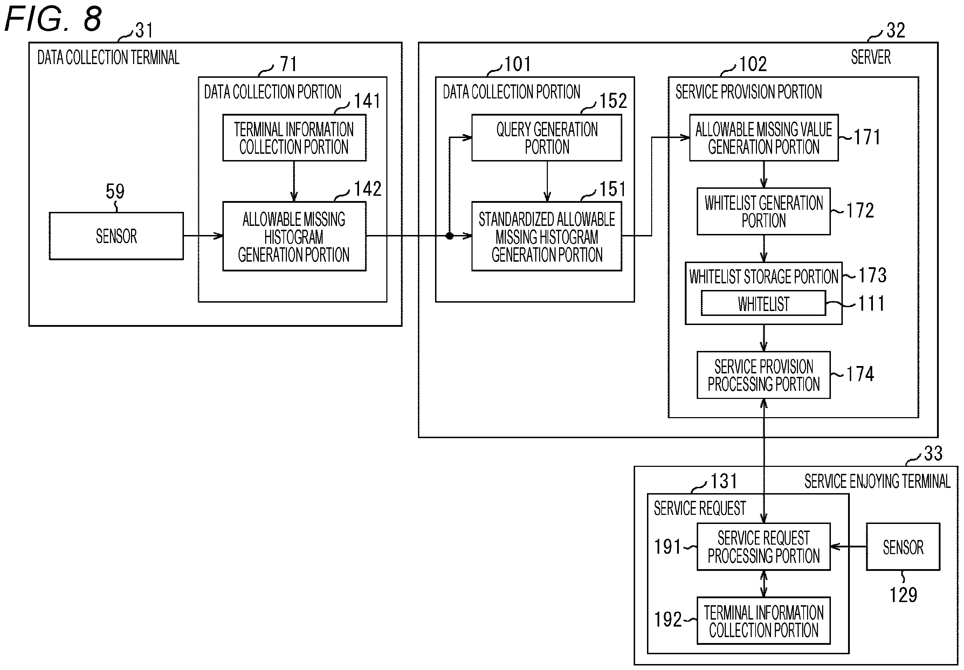

Next, the function implemented by the information processing system 11 in Fig. 4 will be described with reference to Fig. 8.

The data collection portion 71 in the data collection terminal 31 constituting the information processing system 11 includes a terminal information collection portion 141 and an allowable missing histogram generation portion 142.

The terminal information collection portion 141 collects and supplies, to the allowable missing histogram generation portion 142, terminal information including the manufacturer name of the manufacturer of the data collection terminal 31, the product name, the model name, the sensor model number, the type of OS, and the OS version.

The allowable missing histogram generation portion 142 acquires, in association with time information at the time of detection, the detection result detected by driving of the various sensors 59 built in the data collection terminal 31, and generates an allowable missing histogram including the number of times of occurrence for each missing time of data for each sensor 59 on the basis of the acquired information.

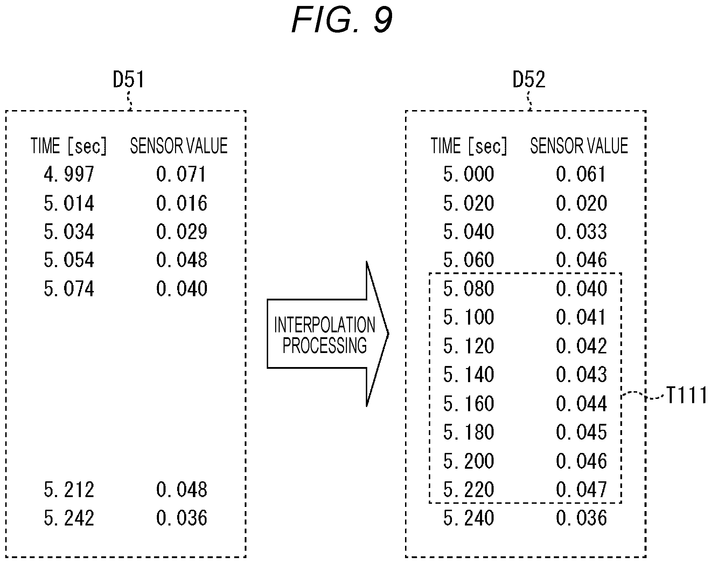

Here, in describing the allowable missing histogram, for example, a case where the sensor 59 acquires a detection result D51 illustrated in the left part of Fig. 9 will be considered.

The detection result D51 indicates, in the left part, the time when the sensor value of the sensor 59 is detected, and indicates, in the right part, the sensor value detected at the corresponding time.

The detection result D51 of Fig. 9 indicates that, in order from the top, the sensor 59 driven at 50 Hz detects the sensor value 0.071 at the time 4.997, the sensor value 0.016 at the time 5.014, the sensor value 0.029 at the time 5.034, the sensor value 0.048 at the time 5.054, the sensor value 0.040 at the time 5.074, the sensor value 0.048 at the time 5.212, and the sensor value 0.036 at the time 5.242.

The allowable missing histogram generation portion 142 corrects this detection result D51 by cleansing processing using a general interpolation algorithm such as linear interpolation, bicubic interpolation, and Bezier interpolation, as indicated by a detection result D52 in the right part of Fig. 9, for example.

In the detection result D52 of Fig. 9, the sensor 59 detects the sensor value 0.061 at the time 5.000, detects the sensor value 0.020 at the time 5.020, detects the sensor value 0.033 at the time 5.040, and detects the sensor value 0.046 at the time 5.060.

Furthermore, it is indicated that the sensor value 0.040 is detected at the time 5.080, the sensor value 0.041 is detected at the time 5.100, the sensor value 0.042 is detected at the time 5.120, the sensor value 0.043 is detected at the time 5.140, the sensor value 0.044 is detected at the time 5.160, the sensor value 0.045 is detected at the time 5.180, the sensor value 0.046 is detected at the time 5.200, the sensor value 0.047 is detected at the time 5.220, and the sensor value 0.036 is detected at the time 5.240.

Since the sensor 59 is driven at 50 Hz, data should theoretically be detected every 0.02 seconds, but data Till enclosed by a dotted line in the drawing, which is the detection result at the time 5.080 to 5.220 of the detection result D52 corresponding to the time 5.074 to 5.121 of the detection result D51, is not detected, and it is indicated that missing has occurred (being a missing state).

That is, in the case of Fig. 9, the allowable missing histogram generation portion 142 calculates 0.140 seconds from the time 5.080 to 5.220 as data missing time.

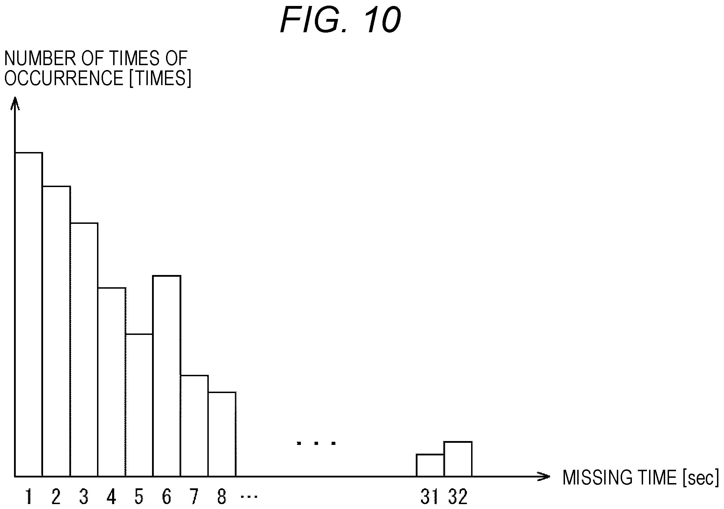

On the basis of the detection result of the sensor 59, the allowable missing histogram generation portion 142 generates, as an allowable missing histogram, a histogram as illustrated in Fig. 10 from the missing time as illustrated in Fig. 9 and the number of times of occurrence of the corresponding missing, and outputs the histogram to the server 32 together with the terminal information. That is, the allowable missing histogram is a histogram indicating the number of times of occurrence of missing that occurs for each missing time as illustrated in Fig. 9.

Note that Fig. 10 illustrates an example of an allowable missing histogram in which the horizontal axis represents the missing time and the vertical axis represents the number of times of occurrence.

Moreover, the allowable missing histogram generation portion 142 generates the allowable missing histogram as illustrated in Fig. 10, detects, as a continuous drive time, a time during which the detection result that generates the allowable missing histogram has been continuously acquired, and outputs the same to the server 32 together with the allowable missing histogram and together with the terminal information. The continuous drive time may be, for example, a time from the time when the application that drives the corresponding sensor 59 is activated to the time when it ends, or may be a time from the activation to the stop of the data collection terminal 31.

The data collection portion 101 of the server 32 includes a standardized allowable histogram generation portion 151 and a query generation portion 152.

The standardized allowable missing histogram generation portion 151 generates a standardized allowable missing histogram on the basis of the allowable missing histogram transmitted from the data collection terminal 31 and the continuous drive time for each piece of terminal information.

More specifically, the standardized allowable missing histogram generation portion 151 accumulates and adds the continuous drive time of the same terminal information, and generates the accumulated continuous drive time.

Furthermore, the standardized allowable missing histogram generation portion 151 divides the number of times of occurrence in each missing time in the allowable missing histogram of the same terminal information transmitted from the data collection terminal 31 by the accumulated continuous drive time to calculate, as a standardized allowable missing histogram, the statistical allowable missing histogram per unit time for each piece of terminal information.

The query generation portion 152 generates and outputs, to the standardized allowable missing histogram generation portion 151, a query for identifying combination of information on the manufacturer name, the product name, the model name, the sensor model number, the type of OS, and the OS version, which are terminal information associated with the allowable missing histogram transmitted from the data collection terminal 31.

Note that the query may include information in which any of the terminal information constituting the combination of the manufacturer name, the product name, the model name, the sensor model number, the type of OS, and the OS version is degenerated.

For example, in a case where the terminal information includes combination of the manufacturer name, the product name, the model name, the sensor model number, the type of OS, and the OS version, the query may be configured from the manufacturer name and the model name among them, or the query may be configured from any of only the manufacturer name, only the model name, and only the sensor model number.

Moreover, a query may be configured for each manufacturer name of the sensor 59, as the terminal information, information on an individual manufacturer name of the sensor 59, for example, may be included as information other than the manufacturer name, the product name, the model name, the sensor model number, the type of OS, and the OS version of the data collection terminal 31.

Then, the standardized allowable missing histogram 151 outputs the query generated according to the terminal information supplied by the query generation portion 152 to the service provision portion 102 in association with the generated standardized allowable missing histogram and the accumulated continuous drive time.

Here, the standardized capacity missing histogram indicates the number of times of occurrence of the missing time of the detection result of the sensor 59 that occurs per unit time for each query.

The service provision portion 102 includes an allowable missing value generation portion 171, a whitelist generation portion 172, a whitelist storage portion 173, and a service provision processing portion 174.

The allowable missing value generation portion 171 calculates an allowable missing value on the basis of the standardized allowable missing histogram and the accumulated continuous drive time, and outputs the allowable missing value to the whitelist generation portion 172 in association with the query.

More specifically, the allowable missing value generation portion 171 sets a weight coefficient wi according to the importance for each missing time in processing the detection result with respect to the standardized allowable missing histogram of equal to or greater than a predetermined time that can be regarded as a length to an extent in which the accumulated continuous drive time can statistically guarantee sufficient accuracy, and calculates, as an allowable missing value S, the sum of products with the number xi of times of occurrence of the missing time by the following Expression (1) .
[Expression 1]

$$S = \sum w_i \cdot x_i \qquad \cdots (1)$$

Here, in Expression (1), i represents a missing time (or an identifier of missing time), S represents an allowable missing value, wi represents a weight coefficient of the missing time i, and xi represents the number of times of occurrence of the missing time i.

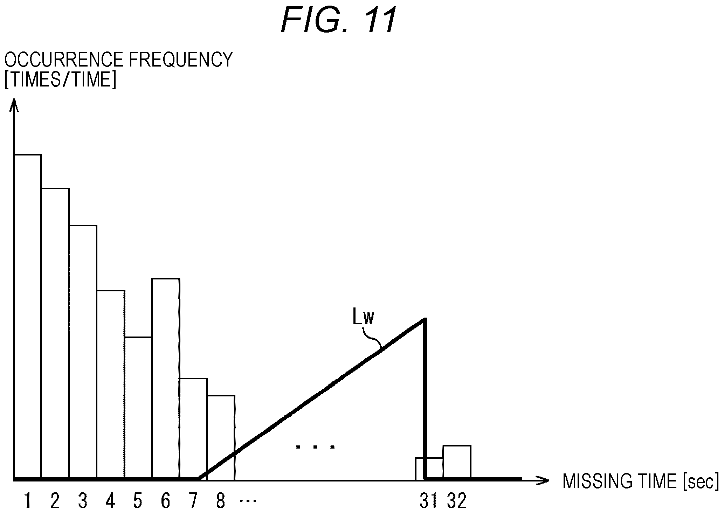

Furthermore, the weight coefficient wi is set as a value indicated by a straight line Lw for each missing time i in the standardized allowable missing histogram of Fig. 11, for example. Note that, in Fig. 11, change in the weight coefficient wi is expressed by a thick solid line as a continuous variable corresponding to the missing time i, but, to be precise, the weight coefficient wi is a discrete variable set for each missing time i, and thus, here, the straight line Lw expresses a change corresponding to the missing time in a case where the values of the weight coefficient wi, which is a discrete variable, are linearly connected.

That is, in the straight line Lw in Fig. 11, the influence is small because a missing time shorter than a predetermined missing time (in Fig. 11, i = 7) can be interpolated with high accuracy. Therefore, the weight coefficient wi is set to 0 because the influence on estimation of the drive state is considered to be small.

Furthermore, for a missing time longer than the predetermined missing time (in Fig. 11, i = 7) and shorter than a predetermined missing time (in Fig. 11, i = 31), the influence on the estimation of the drive state is considered to increase according to the length of the missing time, and therefore, the weight coefficient wi according to the length of the missing time has been set.

Moreover, for a missing time longer than the predetermined missing time (in Fig. 11, i = 31), the influence on the estimation of the drive state is considered to be small because the number of times of occurrence is small, and therefore, the weight coefficient wi has been to 0.

That is, in the allowable missing value obtained in this manner, the large weight coefficient wi is multiplied and added with respect to the number of times of occurrence of the missing time having a large influence on the estimation of the drive state in the missing time, and therefore the larger the allowable missing value is, the more likely to become in a missing state the detection result of the sensor required for providing the service is, and it is presented to be a communication terminal that is unsuitable for providing the discount service.

Conversely, the smaller the allowable missing value is, the smaller the influence on the estimation of the drive state becomes, and therefore, the detection result of the sensor required for providing the discount service is less likely to become in the missing state, and it is presented to be a communication terminal that is suitable for providing the discount service.

Note that, the calculation typified by Expression (1) is a calculation that scalarizes matrix information, and therefore a nonlinear matrix operation may be applied.

Furthermore, the weight coefficient $w_i$ may be determined by applying a machine learning model such as Bayesian deep learning or a neural network using, as training data, the standardized allowable missing histogram and the accumulated continuous drive time in each of a terminal that can provide the service obtained during the operation of the service to be provided and a terminal that cannot provide the service.

By comparing the allowable missing value obtained for each query with the threshold of the allowable missing value at which the service can be provided, the whitelist generation portion 172 registers, as the whitelist 111, the query at which the service can be provided and the query at which the service cannot be provided in association with each other, and stores the query into the whitelist storage portion 173.

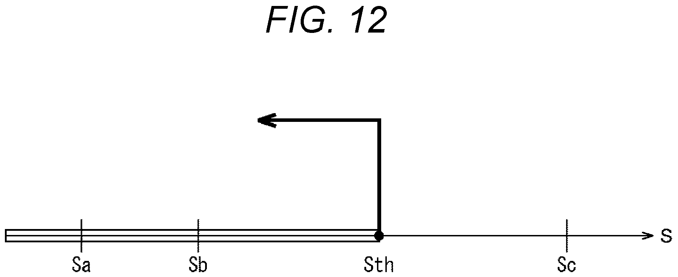

For example, as illustrated in Fig. 12, in a case where an allowable missing value Sa of a query a, an allowable missing value Sb of a query b, and an allowable missing value Sc of a query c are obtained, and the allowable missing values Sc > Sb > Sa, and a case where a threshold Sth larger than the allowable missing value Sb and smaller than the allowable missing value Sc is set will be considered.

In such case, the whitelist generation portion 172 registers the queries a and b of the allowable missing values Sa and Sb smaller than the threshold Sth into the whitelist 111 as terminals that can provide the service.

Furthermore, the whitelist generation portion 172 registers the query c of the allowable missing value Sc larger than the threshold Sth into the whitelist 111 as a terminal that cannot provide the service.

Note that, in Fig. 12, the allowable missing value Sa of the query a, the allowable missing value Sb of the query b, the threshold Sth, and the allowable missing value Sc of the query c are presented in order from the left on an axis of the allowable missing value S, thereby indicating that a communication terminal represented by the queries a and b of the allowable missing values Sa and Sb smaller than the threshold Sth is regarded to be able to provide the service, and a communication terminal represented by the query c of the allowable missing value Sc larger than the threshold Sth is regarded to be unable to provide the service.

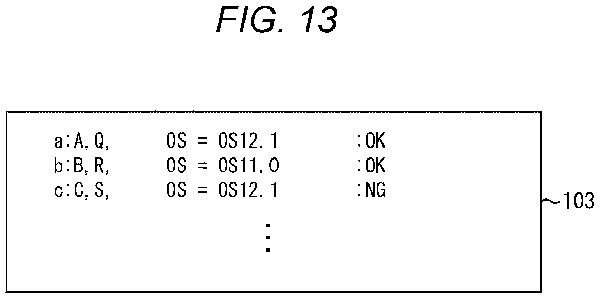

The whitelist 111 has, for example, a configuration as illustrated in Fig. 13.

That is, in the uppermost part of the whitelist 111 in Fig. 13, the manufacturer name of the data collection terminal 31 of the query a corresponding to Fig. 12 is A, the product name is Q, the type of OS is OS12, the OS version is OS12.1, and "OK" indicating that the service provision is possible is registered.

Furthermore, in the second part from the top of the whitelist 111 in Fig. 13, the manufacturer name of the data collection terminal 31 of the query b corresponding to Fig. 12 is B, the product name is R, the type of OS is OS11, the OS version is OS11.0, and "OK" indicating that the service provision is possible is registered.

Moreover, in the third part from the top of the whitelist 111 in Fig. 13, the manufacturer name of the data collection terminal 31 of the query c corresponding to Fig. 12 is C, the product name is S, the type of OS is OS12, the OS version is OS12.1, and "NG" indicating that the service provision is impossible is registered.

Note that only queries that can provide the discount service may be registered in the whitelist 111. Furthermore, instead of the whitelist 111, a so-called blacklist in which only queries that cannot provide the discount service are registered may be configured. Moreover, in a case of a terminal that the user knows is a terminal that can provide the service, regardless of the standardized allowable missing histogram, a query may be able to be additionally registered into the whitelist 111 or the registered query may be able to be deleted.

Furthermore, Fig. 13 illustrates an example in which the manufacturer name, the product name, the type of OS, and the version of the OS are registered for each query as the information registered in the whitelist 111, but at least any of the manufacturer name, the product name, the model name, the sensor model number, the type of OS, and the OS version is only required to be registered, or information other than these may be registered.

The service provision processing portion 174 accepts a request for service provision supplied together with the terminal information from the service enjoying terminal 33, accesses the whitelist 111 stored in the whitelist storage portion 173, searches for a query corresponding to the terminal information, and determines whether or not the service can be provided.

The service provision processing portion 174 notifies the service enjoying terminal 33 that has requested the service provision of the determination result as to whether or not the service can be provided.

Then, on the basis of a detection result detected by the sensor 129 of the service enjoying terminal 33, the service provision processing portion 174 provides the service to the service enjoying terminal 33 that can provide the service. That is, here, for the service enjoying terminal 33 that can provide the service, the service provision processing portion 174 estimates the drive state on the basis of the detection result detected by the sensor 129 of the service enjoying terminal 33, and provides the discount service of the premium corresponding to the drive state.

The service request portion 131 of the service enjoying terminal 33 includes a service request processing portion 191 and a terminal information collection portion 192.

For example, when the input unit 122 is operated by the user or the like, and the service request processing portion 191 is instructed to request the server 32 to provide a discount service, the service request processing portion 191 controls and causes the terminal information collection portion 192 to collect its own terminal information.

The terminal information collection portion 192 has a configuration similar to that of the terminal information collection portion 141 of the data collection terminal 31, and collects and supplies, to the service request processing portion 191, terminal information including information on combination of the manufacturer name, the product name, the model name, the sensor model number, the type of OS, and the OS version of the service enjoying terminal 33.

The service request processing portion 191 requests the server 32 to provide a discount service together with its own terminal information.

The service request processing portion 191 receives a notification indicating whether or not service provision is possible from the server 32.

At this time, in a case where the service can be provided, thereafter, the service request processing portion 191 sequentially transmits the detection results of the sensor 129 to the server 32.

The server 32 provides the service on the basis of the detection result of the sensor 129 transmitted from the service enjoying terminal 33 that can provide the service.

That is, for example, in the case of automobile insurance, the drive state of the driver is analyzed on the basis of the acceleration, the angular velocity, and the position information detected by the sensor 129 of the service enjoying terminal 33 held by the driver who is a policyholder, and a premium discount service in which the premium is discounted in a case where the occurrence rate of accident becomes lower than a predetermined value is provided.

On the other hand, in a case where the service cannot be provided, it becomes possible to immediately notify the policyholder that the service cannot be provided at the timing when the service provision is requested. Therefore, it becomes possible to avoid accepting a request for service provision even in a state where the service enjoying terminal 33 that cannot provide the service is possessed and physically appropriate service provision is impossible.

Note that, in the above, an example has been described in which the whitelist is generated in advance using the allowable missing value using the weight coefficient and it is determined whether or not the terminal can provide the service, but in a case where training data and a data set of detection results are sufficiently prepared, a model that directly calculates a result of whether or not the service can be provided may be learned using a machine learning model.

<Whitelist Generation Processing>

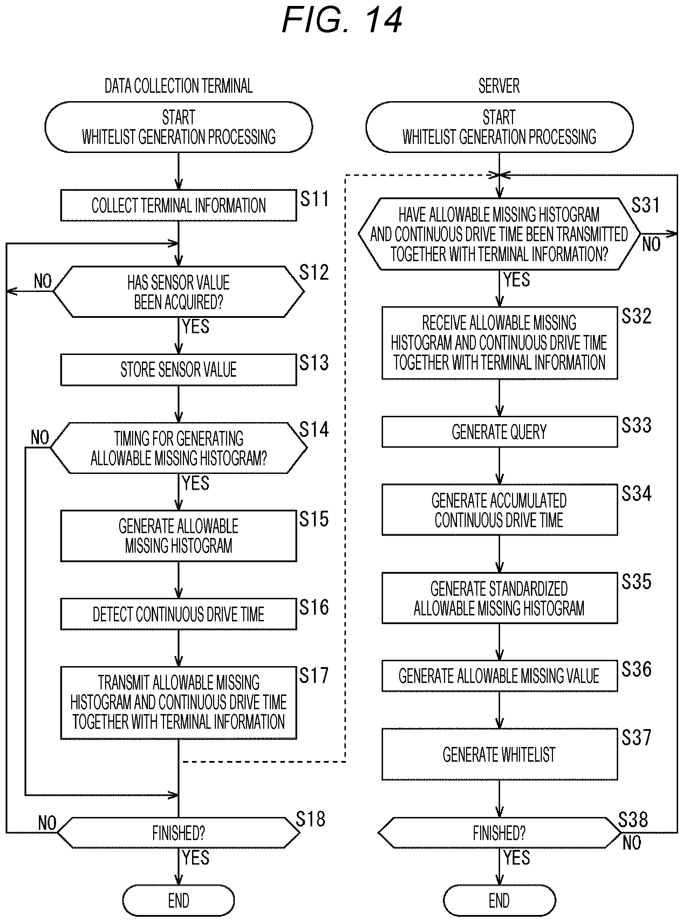

Next, whitelist generation processing by the information processing system 11 in Fig. 8 will be described with reference to the flowchart in Fig. 14.

In step S11, the terminal information collection portion 141 collects and outputs, to the allowable missing histogram generation portion 142, terminal information including combination of the manufacturer name, the product name, the model name, the sensor model number, the type of OS, and the OS version of the data collection terminal 31.

In step S12, the allowable missing histogram generation portion 142 determines whether or not a sensor value has been supplied from the sensor 59 as a detection result.

In step S12, in a case where the sensor value has been supplied from the sensor 59 as the detection result, the processing proceeds to step S13.

In step S13, the allowable missing histogram generation portion 142 stores the detection result together with the information on the detection time.

In step S14, the allowable missing histogram generation portion 142 determines whether or not it is timing for generating an allowable missing histogram.

Here, the timing for generating an allowable missing histogram may be, for example, a timing at which the operation is stopped longer than a predetermined time or, for example, whether or not a predetermined time has elapsed.

In a case where it is determined in step S14 that it is not the timing at which the allowable missing histogram is generated, the processing proceeds to step S18.

In step S18, the allowable missing histogram generation portion 142 determines whether or not the operation of the data collection terminal 31 is ended, that is, an operation such as turning off the power has been performed, and in a case where end is instructed, the processing ends.

On the other hand, in step S18, in a case where end of the operation is not instructed, the processing returns to step S12.

That is, unless end of the operation is instructed, the processing of steps S12, S13, and S18 are repeated until it is regarded as the timing at which the allowable missing histogram is generated, and the detection result and the detection time are stored every time the sensor value of the sensor 59 is detected.

In step S14, in a case where it is regarded as the timing at which the allowable missing histogram is generated, the processing proceeds to step S15.

In step S15, the allowable missing histogram generation portion 142 generates the allowable missing histogram on the basis of the stored detection result and time information.

More specifically, the allowable missing histogram generation portion 142 performs cleansing on the stored detection result by an interpolation algorithm or the like, obtains the number of times of occurrence of the missing state for each missing time on the basis of the detection result subjected to cleansing, and generates the allowable missing histogram.

In step S16, the allowable missing histogram generation portion 142 obtains, as continuous drive time, the time from the timing at which the immediately preceding allowable missing histogram is generated to when the current allowable missing histogram is generated.

In step S17, the allowable missing histogram generation portion 142 controls the communication unit 55 to transmit the allowable missing histogram and the information on the continuous drive time to the server 32 together with the terminal information.

In step S31, the standardized allowable missing histogram generation portion 151 of the data collection portion 101 controls the communication unit 95 to determine whether or not the allowable missing histogram and the information on the continuous drive time have been transmitted together with the terminal information from the data collection terminal 31.

In step S31, in a case where the allowable missing histogram and the information on the continuous drive time have been transmitted together with the terminal information, the processing proceeds to step S38.

In step S38, the standardized allowable missing histogram generation portion 151 determines whether or not stopping of the operation is instructed, and in a case where stopping of the operation is instructed, the processing ends.

Furthermore, in a case where stop of the operation is not instructed in step S38, the processing returns to step S31, and the subsequent processing is repeated.

That is, in a case where the allowable missing histogram and the information on the continuous drive time are not transmitted together with the terminal information, the processing of steps S31 and S38 are repeated until stopping of the operation is instructed.

In step S31, in a case where the allowable missing histogram and the information on the continuous drive time are transmitted together with the terminal information from the data collection terminal 31, the processing proceeds to step S32.

In step S32, the standardized allowable missing histogram generation portion 151 controls the communication unit 95 to receive, together with the terminal information, the allowable missing histogram and the information on the continuous drive time transmitted from the data collection terminal 31. At this time, the query generation portion 152 acquires the terminal information having been transmitted.

In step S33, on the basis of the terminal information of the data collection terminal 31 that has transmitted the allowable missing histogram and the information on the continuous drive time, the query generation portion 152 generates and outputs, to the standardized allowable missing histogram generation portion 151, a query.

In step S34, the standardized allowable missing histogram generation portion 151 accumulates the continuous drive time and calculates the accumulated continuous drive time.

In step S35, on the basis of the allowable missing histogram and the information on accumulated continuous drive time, the standardized allowable missing histogram generation portion 151 generates and outputs, to the allowable missing value generation portion 171 of the service provision portion 102, a standardized allowable missing histogram.

More specifically, by dividing the allowable missing histogram by the accumulated continuous drive time, the standardized allowable missing histogram generation portion 151 obtains and outputs, to the allowable missing value generation portion 171 of the service provision portion 102 together with the query, an allowable missing histogram per unit time as a standardized allowable missing histogram.

In step S36, on the basis of the standardized allowable missing histogram, the allowable missing value generation portion 171 of the service provision portion 102 calculates and outputs, to the whitelist generation portion 172 together with the query, the allowable missing value.

More specifically, as indicated by Expression (1), the allowable missing value generation portion 171 calculates the allowable missing value by multiplying the number of times of occurrence for each missing time of the standardized allowable missing histogram by the weight coefficient and obtaining the sum.

In step S37, the whitelist generation portion 172 compares the allowable missing value with the threshold at which the service can be provided, registers, into the whitelist 111, and stores, into the whitelist storage portion 173, the comparison result and the terminal information that is information to become a query in association with each other, and the processing proceeds to step S38.

That is, by the above processing, the terminal information, the allowable missing histogram, and the information on the continuous drive time are generated in the data collection terminal 31 and transmitted to the server 32.

Furthermore, in the server 32, the query is generated on the basis of the terminal information, the continuous drive time is accumulated to generate the accumulated continuous drive time, and the allowable missing histogram per unit time is generated as the standardized allowable missing histogram by dividing the number of times of occurrence for each missing time in the allowable missing histogram by the accumulated continuous drive time.

Then, the sum of products using the weight coefficient is obtained as an allowable missing value on the basis of the standardized allowable missing histogram, and it is determined whether or not service provision is possible by comparison with a threshold, and registered in the whitelist 111.

As a result, when service provision is requested, it is possible to immediately determine whether or not service provision is possible on the basis of the whitelist 111.

<Service Provision Processing>

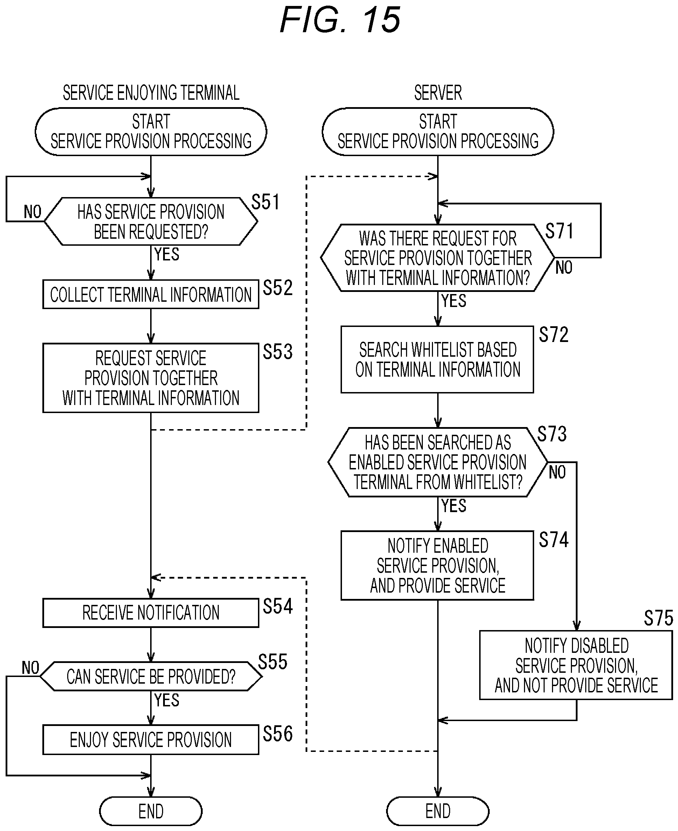

Next, service provision processing by the information processing system 11 in Fig. 8 will be described with reference to the flowchart of Fig. 15.

In step S51, the service request processing portion 191 of the service request portion 131 in the service enjoying terminal 33 determines whether or not service provision is requested by the user operating the input unit 122 or the like, and repeats similar processing until it is requested.

That is, the service provision mentioned here is provision of a discount service of a premium according to the drive state in automobile insurance, for example.

In a case where it is determined in step S51 that service provision is requested by the user operating the input unit 122 or the like, the processing proceeds to step S52.

In step S52, the service request processing portion 191 controls and causes the terminal information collection portion 192 to collect the terminal information.

In step S53, the service request processing portion 191 controls the communication unit 125 to notify the server 32 of the request for service provision together with the terminal information.

In step S71, the service provision processing portion 174 of the service provision portion 102 in the server 32 controls the communication unit 95 to determine whether or not there is a request for service provision together with the terminal information from the service enjoying terminal 33, and repeats similar processing until there is a request.

In a case where it is determined in step S71 that there is a request for service provision together with the terminal information from the service enjoying terminal 33, the processing proceeds to step S72.

In step S72, the service provision processing portion 174 controls the communication unit 95 to acquire terminal information together with the request for service provision from the service enjoying terminal 33. Then, the service provision processing portion 174 accesses the whitelist storage portion 173 and searches the whitelist 111 for a corresponding query on the basis of the acquired terminal information.

In step S73, the service provision processing portion 174 determines whether or not the query corresponding to the terminal information of the service enjoying terminal 33 that has requested the service provision is registered in the whitelist 111 as a terminal that can provide the service.

In a case where it is determined in step S73 that the query corresponding to the terminal information of the service enjoying terminal 33 that has requested the service provision is registered in the whitelist 111 as a terminal that can provide the service, the processing proceeds to step S74.

In step S74, the service provision processing portion 174 determines that the service can be provided, and controls the communication unit 95 to notify the service enjoying terminal 33 that has requested the service provision that the service can be provided.

Then, thereafter, the service provision processing portion 174 controls the communication unit 95 to provide the service based on the detection result of the sensor 129 of the service enjoying terminal 33.

Furthermore, in a case where it is determined in step S73 that the query corresponding to the terminal information of the service enjoying terminal 33 that has requested the service provision is registered in the whitelist 111 as a terminal that cannot provide the service, the processing proceeds to step S75.

In step S75, the service provision processing portion 174 determines that the service cannot be provided, and controls the communication unit 95 to notify the service enjoying terminal 33 that has requested the service provision that the service cannot be provided.

In step S54, the service request processing portion 191 of the service request portion 131 of the service enjoying terminal 33 controls the communication unit 125 to receive the notification transmitted from the server 32.

In step S55, the service request processing portion 191 determines whether or not the received notification indicates that the service can be provided.

In step S55, in a case where it is regarded as the notification indicating that the service can be provided, the processing proceeds to step S56.

In step S56, the service request processing portion 191 controls the communication unit 125 to notify the server 32 of the detection result detected by the sensor 129, and receives the service provided on the basis of the detection result.

According to the above processing, since the information indicating whether or not service provision is possible is registered in advance as a whitelist in association with the query (terminal information), when there is a request for service provision, it becomes possible to determine whether or not service provision is possible on the basis of the query corresponding to terminal information including combination of the manufacturer name, the product name, the model name, the sensor model number, the type of OS, and the OS version of the service enjoying terminal 33 requesting the service provision.

Therefore, it becomes possible to highly accurately determine, at low cost, whether or not a mobile terminal to be used can provide a service when a service using a mobile terminal is provided.

As a result, when the service is provided, it is possible to appropriately acquire the detection result of the sensor built in the smartphone possessed by the user, so that it is possible to achieve provision of an appropriate service.

Furthermore, when service provision is requested and if appropriate service cannot be provided according to the product of the smartphone or the like, it is possible to notify that appropriate service provision cannot be performed at a stage before providing the service, and therefore, it becomes possible to suppress in advance a situation in which the detection result by the sensor of the smartphone cannot be appropriately acquired and appropriate service cannot be provided.

Moreover, since it becomes possible to suppress the occurrence of complaints from the user due to the fact that the detection result by the sensor of the smartphone cannot be appropriately acquired and the service provision cannot be appropriately performed, it becomes possible to reduce the cost related to the complaints handling of the service provision.

Note that the whitelist 111 continues to be updated as long as the allowable missing histogram and the information on the continuous drive time are continuously transmitted together with the terminal information from the data collection terminal 31, and therefore, for example, even if a new product of the data collection terminal 31 appears, it is registered by a new query, and it is possible to appropriately cope with the new product.

Moreover, since the whitelist 111 continues to be updated with the lapse of time, a missing state occurs due to aging deterioration, and it becomes possible to appropriately reflect even in a case where even if service can be provided at the beginning of release, the service provision becomes impossible with the lapse of time.

However, in this case, for the service enjoying terminal 33 that has once accepted the service provision, processing of confirming whether or not the service provision has become disabled by periodically searching the whitelist 111 on the basis of the terminal information becomes necessary.

Furthermore, in the above, an example has been described in which the driving pattern of the driver who is a policyholder is recognized using the detection result of the sensor built in the smartphone possessed by the policyholder in automobile insurance, and the discount service of the premium corresponding to the recognized driving pattern is provided.

However, the technology of the present disclosure may be applied not only to the technology of providing the discount service of the premium described above but also to other technologies as long as it is processing using a continuous detection result of the sensor, and may be applied to, for example, a technology of providing a service of detecting a daily walking distance or exercise amount of the user who possesses a smartphone and presenting whether or not the user lacks exercise.

Moreover, instead of the information processing system including the smartphone and the server, the technology of the present disclosure may be applied to, for example, an information processing system including a vibration detection device including a vibration sensor that continuously detects vibration of a continuously operating apparatus and a server.

In this case, the technology of the present disclosure may be applied to a technology of providing a service of notifying a communication terminal of the owner or the like who owns the apparatus at the time when abnormal vibration of the apparatus is detected in the server, by the vibration detection device continuously detecting and transmitting, to the server, vibration of the apparatus.

In providing this service, the server generates in advance, as a whitelist, a query of the vibration detection device that can provide the service from the detection result of each vibration detection device, and when the provision of the service is requested, by searching the whitelist for the corresponding query, it becomes possible to immediately determine whether or not the service can be provided.

Furthermore, the allowable missing value can be regarded as the reliability with respect to the missing state of the communication terminal, and therefore it becomes possible to adjust the reliability by increasing the threshold of the allowable missing value in service provision.

For example, by increasing the threshold of the allowable missing value, it becomes possible to achieve highly reliable service provision.

Furthermore, by lowering the threshold of the allowable missing value, it becomes possible to achieve a service that increases the number of communication terminals that can provide the service although the reliability is slightly sacrificed.

Moreover, as described with reference to Expression (1) and the straight line Lw in Fig. 11, since the weight coefficient wi for the number of times of occurrence can be set according to the influence on the subsequent processing (for example, recognition processing of the driving pattern), it becomes possible to set an appropriate allowable missing value according to the subsequent processing, and therefore, it becomes possible to appropriately determine whether or not service provision is possible.

Furthermore, the example in which the data collection terminal 31 and the service enjoying terminal 33 are different has been described above, but since the data collection terminal 31 and the service enjoying terminal 33 are assumed to be communication terminals including basically the same function, the information processing system may be configured with a communication terminal including both the function of the data collection terminal 31 and the function of the service enjoying terminal 33 and the server 32.

However, in this case, it becomes assumed that the whitelist is generated in advance by using the communication terminal functioning as the data collection terminal 31, and after the whitelist is generated, service provision needs to be requested by the communication terminal functioning as the service enjoying terminal 33.

<<3. Example of Causing Software to Execute>>

It is possible to cause hardware to execute the above-described series of processing, but is also possible to cause software to execute the same. In a case where the series of processing is executed by software, a program constituting the software is installed from a recording medium to a computer incorporated in dedicated hardware, a general-purpose computer, for example, capable of executing various functions by installing various programs, or the like.

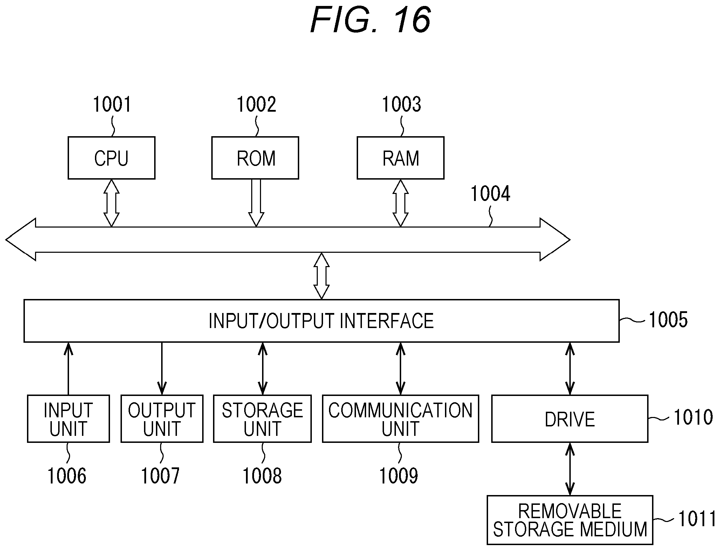

Fig. 16 illustrates a configuration example of the general-purpose computer. This personal computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected with an input unit 1006 including an input device such as a keyboard and a mouse with which the user inputs an operation command, an output unit 1007 that outputs, to a display device, a processing operation screen or an image of a processing result, a storage unit 1008 including a hard disk drive or the like that stores a program and various data, and a communication unit 1009 that includes a local area network (LAN) adapter and executes communication processing via a network typified by the Internet. Furthermore, a drive 1010 that reads and writes data from and to a removable storage medium 1011 such as a magnetic disk (including a flexible disk), an optical disk (including a compact disc-read only memory (CD-ROM) and a digital versatile disc (DVD)), a magneto-optical disk (including a mini disc (MD)), or a semiconductor memory is connected.

The CPU 1001 executes various processing according to a program stored in the ROM 1002 or a program read from the removable storage medium 1011 such as a magnetic disk, an optical disk, a magneto-optical disk, or a semiconductor memory, installed into the storage unit 1008, and loaded from the storage unit 1008 to the RAM 1003. The RAM 1003 also appropriately stores data and the like necessary for the CPU 1001 to execute various processing.

In the computer configured as described above, for example, the CPU 1001 loads a program stored in the storage unit 1008 into the RAM 1003 via the input/output interface 1005 and the bus 1004 and executes the program, whereby the above-described series of processing is performed.

The program executed by the computer (CPU 1001) can be provided by being recorded in the removable storage medium 1011 as a package medium or the like, for example. Furthermore, the program can be provided via a wired or wireless transmission medium such as a local area network, the Internet, and digital satellite broadcasting.

In the computer, the program can be installed into the storage unit 1008 via the input/output interface 1005 by attaching the removable storage medium 1011 to the drive 1010. Furthermore, the program can be received by the communication unit 1009 via a wired or wireless transmission medium and installed into the storage unit 1008. Furthermore, the program can be installed into the ROM 1002 or the storage unit 1008 in advance.

Note that the program executed by the computer may be a program in which processing is performed in time series along the order explained in the present description, or may be a program in which processing is performed in parallel or at a necessary timing such as when a call is made.

Note that the CPU 1001 in Fig. 16 implements the functions of the control units 51, 91, and 121 in Figs. 5 to 7.

Furthermore, in the present description, the system means a set of a plurality of configuration elements (devices, modules (components), and the like), and it does not matter whether or not all the configuration elements are present in the same housing. Therefore, a plurality of devices housed in separate housings and connected via a network and one device in which a plurality of modules are housed in one housing are both systems.

Note that the embodiment of the present disclosure is not limited to the above-described embodiment, and various modifications can be made without departing from the gist of the present disclosure.

For example, the present disclosure can have a configuration of cloud computing in which one function is shared and processed in cooperation by a plurality of devices via a network.

Furthermore, each step explained in the above-described flowcharts can be executed by one device or executed by a plurality of devices in a shared manner.

Moreover, in a case where one step includes a plurality of processing, the plurality of processing included in the one step can be executed by one device or executed by a plurality of devices in a shared manner.

Note that the present disclosure can also have the following configurations.

<1> An information processing device including:

a missing value generation portion that generates a missing value that indicates a degree of data missing detected by a communication terminal; and

a list generation portion that generates, on the basis of the missing value, a list of the communication terminal that can perform processing based on data detected by the communication terminal.

<2> The information processing device according to <1> further including:

an acquisition unit that acquires information indicating a degree of data missing detected by the communication terminal transmitted from the communication terminal, in which

the missing value generation portion generates the missing value on the basis of information indicating a degree of data missing detected by the communication terminal acquired by the acquisition unit.

<3> The information processing device according to <2>, in which information indicating a degree of data missing detected by the communication terminal is a missing histogram including a number of times of occurrence for each missing time that is time when data detected by the communication terminal is missing.

<4> The information processing device according to <3>, in which the missing histogram is a standardized missing histogram standardized by accumulated drive time that is an accumulated time of continuous drive time of the communication terminal.

<5> The information processing device according to <4>, in which the missing value generation portion calculates, as the missing value, a sum in which a number of times of occurrence for the each missing time in the standardized missing histogram is multiplied by a predetermined weight coefficient.

<6> The information processing device according to <5>, in which the predetermined weight coefficient is a coefficient that is larger as the missing time becomes longer for a range, in the missing time, longer than a first predetermined time and shorter than a second predetermined time longer than the first predetermined time.

<7> The information processing device according to <5>, in which the predetermined weight coefficient is a coefficient obtained by machine learning.

<8> The information processing device according to <2>, in which

the acquisition unit acquires information indicating a degree of data missing of the communication terminal in association with information indicating a type of the communication terminal,

the missing value generation portion generates the missing value in association with information indicating a type of the communication terminal on the basis of information indicating a degree of data missing detected by the communication terminal acquired by the acquisition unit, and

the list generation portion generates a list of a type of the communication terminal that can perform processing based on data detected by the communication terminal.

<9> The information processing device according to <8>, in which the list generation portion generates a list of a type of the communication terminal that can perform processing based on data detected by the communication terminal on the basis of comparison between the missing value and a predetermined threshold.

<10> The information processing device according to <9>, in which the list generation portion registers the missing value into the list as a type of the communication terminal that can perform processing based on data detected by the communication terminal in a case where the missing value is smaller than the predetermined threshold.

<11> The information processing device according to <8>, in which a type of the communication terminal includes at least any of information on a manufacturer, a product name, a model name, a sensor model, an OS name, and an OS version of the communication terminal.

<12> The information processing device according to <9>, in which

information indicating a type of the communication terminal is managed as a query,
the missing value generation portion generates the missing value in association with a query indicating a type of the communication terminal, and
the list generation portion registers the missing value into the list as a query of the communication terminal that can perform processing based on data detected by the communication terminal.

<13> The information processing device according to <8>, in which
processing based on data detected by the communication terminal is processing according to a drive state detected when a user who possesses the communication terminal drives a vehicle in a state of possessing the communication terminal.
<14> The information processing device according to <13>, in which
processing according to the drive state is a discount service of a premium according to the drive state when the user is a policyholder of automobile insurance.
<15> The information processing device according to any of <1> to <14>, in which
data detected by the communication terminal is data detected by a sensor built in the communication terminal, and
the sensor includes at least any of an acceleration sensor, a gyro sensor, a geomagnetic sensor, an atmospheric pressure sensor, a microphone, a light amount sensor, a motion detector, and a position information sensor.
<16> The information processing device according to any of <1> to <15> further including:
a determination unit that acquires a request for processing based on data detected by another communication terminal different from the communication terminal together with information on a type of the another communication terminal and searches the list to determine whether or not processing based on data detected by the communication terminal is possible.
<17> An information processing method including steps of

generating a missing value that indicates a degree of data missing detected by a communication terminal, and
generating, on the basis of the missing value, a list of the communication terminal that can perform processing based on data detected by the communication terminal.

<18> A program that causes a computer to function as

a missing value generation portion that generates a missing value that indicates a degree of data missing detected by a communication terminal, and
a list generation portion that generates, on the basis of the missing value, a list of the communication terminal that can perform processing based on data detected by the communication terminal.

REFERENCE SIGNS LIST

| | |
|---|---|
| 11 | Information processing system |
| 31 and 31-1 to 31-nData | collection terminal |
| 32 | Server |
| 33 and 33-1 to 33-mService | enjoying terminal |
| 51 | Control unit |
| 59 and 59-1 to 59-s | Sensor |
| 71 | Data collection portion |
| 91 | Control unit |
| 101 | Data collection portion |
| 102 | Service provision portion |
| 111 | Whitelist |
| 121 | Control unit |
| 131 | Service request portion |
| 129 and 129-1 to 129-t | Sensor |
| 141 | Terminal information collection portion |
| 142 | Allowable missing histogram generation portion |
| 151 | Standardized allowable missing histogram generation portion |

| 152 | Query generation portion |
| 171 | Allowable missing value generation portion |
| 172 | Whitelist generation portion |
| 173 | Whitelist storage portion |
| 174 | Service provision processing portion |
| 191 | Service request portion |
| 192 | Terminal information collection portion |

**Claims**

1. An information processing device comprising:

   a missing value generation portion that generates a missing value that indicates a degree of data missing detected by a communication terminal; and
   a list generation portion that generates, on a basis of the missing value, a list of the communication terminal that can perform processing based on data detected by the communication terminal.

2. The information processing device according to claim 1 further comprising:

   an acquisition unit that acquires information indicating a degree of data missing detected by the communication terminal transmitted from the communication terminal, wherein
   the missing value generation portion generates the missing value on a basis of information indicating a degree of data missing detected by the communication terminal acquired by the acquisition unit.

3. The information processing device according to claim 2, wherein
   information indicating a degree of data missing detected by the communication terminal is a missing histogram including a number of times of occurrence for each missing time that is time when data detected by the communication terminal is missing.

4. The information processing device according to claim 3, wherein
   the missing histogram is a standardized missing histogram standardized by accumulated drive time that is an accumulated time of continuous drive time of the communication terminal.

5. The information processing device according to claim 4, wherein
   the missing value generation portion calculates, as the missing value, a sum in which a number of times of occurrence for the each missing time in the standardized missing histogram is multiplied by a predetermined weight coefficient.

6. The information processing device according to claim 5, wherein
   the predetermined weight coefficient is a coefficient that is larger as the missing time becomes longer for a range, in the missing time, longer than a first predetermined time and shorter than a second predetermined time longer than the first predetermined time.

7. The information processing device according to claim 5, wherein
   the predetermined weight coefficient is a coefficient obtained by machine learning.

8. The information processing device according to claim 2, wherein

   the acquisition unit acquires information indicating a degree of data missing of the communication terminal in association with information indicating a type of the communication terminal,
   the missing value generation portion generates the missing value in association with information indicating a type of the communication terminal on a basis of information indicating a degree of data missing detected by the communication terminal acquired by the acquisition unit, and
   the list generation portion generates a list of a type of the communication terminal that can perform processing based on data detected by the communication terminal.

9. The information processing device according to claim 8, wherein
   the list generation portion generates a list of a type of the communication terminal that can perform processing based on data detected by the communication terminal on a basis of comparison between the missing value and a predetermined threshold.

10. The information processing device according to claim 9, wherein
the list generation portion registers the missing value into the list as a type of the communication terminal that can perform processing based on data detected by the communication terminal in a case where the missing value is smaller than the predetermined threshold.

11. The information processing device according to claim 8, wherein
a type of the communication terminal includes at least any of information on a manufacturer, a product name, a model name, a sensor model, an OS name, and an OS version of the communication terminal.

12. The information processing device according to claim 9, wherein

information indicating a type of the communication terminal is managed as a query,
the missing value generation portion generates the missing value in association with a query indicating a type of the communication terminal, and
the list generation portion registers the missing value into the list as a query of the communication terminal that can perform processing based on data detected by the communication terminal.

13. The information processing device according to claim 8, wherein
processing based on data detected by the communication terminal is processing according to a drive state detected when a user who possesses the communication terminal drives a vehicle in a state of possessing the communication terminal.

14. The information processing device according to claim 13, wherein
processing according to the drive state is a discount service of a premium according to the drive state when the user is a policyholder of automobile insurance.

15. The information processing device according to claim 1, wherein
data detected by the communication terminal is data detected by a sensor built in the communication terminal, and
the sensor includes at least any of an acceleration sensor, a gyro sensor, a geomagnetic sensor, an atmospheric pressure sensor, a microphone, a light amount sensor, a motion detector, and a position information sensor.

16. The information processing device according to claim 1 further comprising:
a determination unit that acquires a request for processing based on data detected by another communication terminal different from the communication terminal together with information on a type of the another communication terminal and searches the list to determine whether or not processing based on data detected by the communication terminal is possible.

17. An information processing method comprising steps of

generating a missing value that indicates a degree of data missing detected by a communication terminal, and
generating, on a basis of the missing value, a list of the communication terminal that can perform processing based on data detected by the communication terminal.

18. A program that causes a computer to function as

a missing value generation portion that generates a missing value that indicates a degree of data missing detected by a communication terminal, and
a list generation portion that generates, on a basis of the missing value, a list of the communication terminal that can perform processing based on data detected by the communication terminal.

# FIG. 1

# FIG. 2

<table>
<tr><td colspan="2" align="center">D1</td></tr>
<tr><td>TIME [sec]</td><td>ACCELERATION</td></tr>
<tr><td>4. 997</td><td>0. 071</td></tr>
<tr><td>5. 014</td><td>0. 016</td></tr>
<tr><td>5. 034</td><td>0. 029</td></tr>
<tr><td>5. 064</td><td>0. 048</td></tr>
<tr><td>5. 074</td><td>0. 046</td></tr>
<tr><td>3. 508</td><td>0. 040</td></tr>
<tr><td>3. 529</td><td>0. 041</td></tr>
<tr><td>3. 566</td><td>0. 046</td></tr>
<tr><td>3. 566</td><td>0. 042</td></tr>
<tr><td>3. 588</td><td>0. 036</td></tr>
<tr><td>3. 606</td><td>0. 044</td></tr>
<tr><td>3. 641</td><td>0. 049</td></tr>
</table>

T1
T2

<table>
<tr><td colspan="2" align="center">D2</td></tr>
<tr><td>TIME [sec]</td><td>ACCELERATION</td></tr>
<tr><td>4. 997</td><td>0. 071</td></tr>
<tr><td>5. 014</td><td>0. 016</td></tr>
<tr><td>5. 034</td><td>0. 029</td></tr>
<tr><td>5. 054</td><td>0. 048</td></tr>
<tr><td>5. 074</td><td>0. 046</td></tr>
<tr><td>5. 094</td><td>0. 040</td></tr>
<tr><td>5. 115</td><td>0. 041</td></tr>
<tr><td>5. 135</td><td>0. 046</td></tr>
<tr><td>5. 152</td><td>0. 042</td></tr>
<tr><td>5. 174</td><td>0. 036</td></tr>
<tr><td>5. 192</td><td>0. 044</td></tr>
<tr><td>5. 212</td><td>0. 049</td></tr>
</table>

T11
T12
T13

<table>
<tr><td colspan="2" align="center">D3</td></tr>
<tr><td>TIME [sec]</td><td>ACCELERATION</td></tr>
<tr><td>5. 000</td><td>0. 061</td></tr>
<tr><td>5. 020</td><td>0. 020</td></tr>
<tr><td>5. 040</td><td>0. 033</td></tr>
<tr><td>5. 060</td><td>0. 046</td></tr>
<tr><td>5. 080</td><td>0. 044</td></tr>
<tr><td>5. 100</td><td>0. 041</td></tr>
<tr><td>5. 120</td><td>0. 042</td></tr>
<tr><td>5. 140</td><td>0. 044</td></tr>
<tr><td>5. 160</td><td>0. 040</td></tr>
<tr><td>5. 180</td><td>0. 039</td></tr>
<tr><td>5. 200</td><td>0. 045</td></tr>
<tr><td>5. 220</td><td>0. 048</td></tr>
</table>

EP 4 123 560 A1

# FIG. 3

D11

| TIME | ACCELERATION |
|---|---|
| 48582 | 0. 362846 |
| 48602 | 0. 254973 |
| 48622 | 0. 333426 |
| 48642 | 0. 1471 |
| 48663 | 0. 353039 |
| 48684 | 0. 05884 |
| 48705 | 0. 441299 |
| 272404 | 0. 460913 |
| 272421 | 0. 254973 |
| 272441 | 0. 009807 |
| 272461 | 0. 284393 |
| 272481 | 0. 333426 |

}F1

## FIG. 4

## FIG. 5

DATA COLLECTION TERMINAL — 31

CONTROL UNIT — 51

DATA COLLECTION PORTION — 71

SENSOR — 59-1

SENSOR — 59-s

INPUT UNIT — 52

OUTPUT UNIT — 53

STORAGE UNIT — 54

COMMUNICATION UNIT — 55

DRIVE — 56

REMOVABLE STORAGE MEDIUM — 57

58

FIG. 6

EP 4 123 560 A1

# FIG. 7

SERVICE ENJOYING TERMINAL (33)

- 121 CONTROL UNIT
  - 131 SERVICE REQUEST PORTION
- 129-1 SENSOR
- 129-t SENSOR
- 128 (bus)
- 122 INPUT UNIT
- 123 OUTPUT UNIT
- 124 STORAGE UNIT
- 125 COMMUNICATION UNIT
- 126 DRIVE
- 127 REMOVABLE STORAGE MEDIUM

EP 4 123 560 A1

# FIG. 8

**DATA COLLECTION TERMINAL** (31)

DATA COLLECTION PORTION (71)

- TERMINAL INFORMATION COLLECTION PORTION (141)
- ALLOWABLE MISSING HISTOGRAM GENERATION PORTION (142)

SENSOR (59)

**SERVER** (32)

DATA COLLECTION PORTION (101)

- QUERY GENERATION PORTION (152)
- STANDARDIZED ALLOWABLE MISSING HISTOGRAM GENERATION PORTION (151)

SERVICE PROVISION PORTION (102)

- ALLOWABLE MISSING VALUE GENERATION PORTION (171)
- WHITELIST GENERATION PORTION (172)
- WHITELIST STORAGE PORTION (173)
  - WHITELIST (111)
- SERVICE PROVISION PROCESSING PORTION (174)

**SERVICE ENJOYING TERMINAL** (33)

SERVICE REQUEST (131)

- SERVICE REQUEST PROCESSING PORTION (191)
- TERMINAL INFORMATION COLLECTION PORTION (192)

SENSOR (129)

EP 4 123 560 A1

## FIG. 9

D51

| TIME [sec] | SENSOR VALUE |
|---|---|
| 4.997 | 0.071 |
| 5.014 | 0.016 |
| 5.034 | 0.029 |
| 5.054 | 0.048 |
| 5.074 | 0.040 |
| | |
| 5.212 | 0.048 |
| 5.242 | 0.036 |

INTERPOLATION PROCESSING

D52

| TIME [sec] | SENSOR VALUE |
|---|---|
| 5.000 | 0.061 |
| 5.020 | 0.020 |
| 5.040 | 0.033 |
| 5.060 | 0.046 |
| 5.080 | 0.040 |
| 5.100 | 0.041 |
| 5.120 | 0.042 |
| 5.140 | 0.043 |
| 5.160 | 0.044 |
| 5.180 | 0.045 |
| 5.200 | 0.046 |
| 5.220 | 0.047 |
| 5.240 | 0.036 |

T111

*FIG. 10*

NUMBER OF TIMES OF OCCURRENCE [TIMES]

1 2 3 4 5 6 7 8 ⋯ 31 32

MISSING TIME [sec]

## FIG. 11

EP 4 123 560 A1

# FIG. 12

## FIG. 13

```
a:A, Q,      OS = OS12.1      :OK
b:B, R,      OS = OS11.0      :OK
c:C, S,      OS = OS12.1      :NG

              ⋮
```

~103

# FIG. 14

DATA COLLECTION TERMINAL

START
WHITELIST GENERATION PROCESSING

COLLECT TERMINAL INFORMATION — S11

HAS SENSOR VALUE BEEN ACQUIRED? — S12
NO →
↓ YES

STORE SENSOR VALUE — S13

TIMING FOR GENERATING ALLOWABLE MISSING HISTOGRAM? — S14
NO
↓ YES

GENERATE ALLOWABLE MISSING HISTOGRAM — S15

DETECT CONTINUOUS DRIVE TIME — S16

TRANSMIT ALLOWABLE MISSING HISTOGRAM AND CONTINUOUS DRIVE TIME TOGETHER WITH TERMINAL INFORMATION — S17

NO ← FINISHED? — S18
↓ YES

END

---

SERVER

START
WHITELIST GENERATION PROCESSING

HAVE ALLOWABLE MISSING HISTOGRAM AND CONTINUOUS DRIVE TIME BEEN TRANSMITTED TOGETHER WITH TERMINAL INFORMATION? — S31
NO →
↓ YES

RECEIVE ALLOWABLE MISSING HISTOGRAM AND CONTINUOUS DRIVE TIME TOGETHER WITH TERMINAL INFORMATION — S32

GENERATE QUERY — S33

GENERATE ACCUMULATED CONTINUOUS DRIVE TIME — S34

GENERATE STANDARDIZED ALLOWABLE MISSING HISTOGRAM — S35

GENERATE ALLOWABLE MISSING VALUE — S36

GENERATE WHITELIST — S37

FINISHED? — S38
NO →
↓ YES

END

35

# FIG. 15

SERVICE ENJOYING TERMINAL

START
SERVICE PROVISION PROCESSING

S51 — HAS SERVICE PROVISION BEEN REQUESTED? — NO

YES

S52 — COLLECT TERMINAL INFORMATION

S53 — REQUEST SERVICE PROVISION TOGETHER WITH TERMINAL INFORMATION

S54 — RECEIVE NOTIFICATION

S55 — CAN SERVICE BE PROVIDED? — NO

YES

S56 — ENJOY SERVICE PROVISION

END

SERVER

START
SERVICE PROVISION PROCESSING

S71 — WAS THERE REQUEST FOR SERVICE PROVISION TOGETHER WITH TERMINAL INFORMATION? — NO

YES

S72 — SEARCH WHITELIST BASED ON TERMINAL INFORMATION

S73 — HAS BEEN SEARCHED AS ENABLED SERVICE PROVISION TERMINAL FROM WHITELIST? — NO

YES

S74 — NOTIFY ENABLED SERVICE PROVISION, AND PROVIDE SERVICE

S75 — NOTIFY DISABLED SERVICE PROVISION, AND NOT PROVIDE SERVICE

END

# FIG. 16

CPU 1001

ROM 1002

RAM 1003

1004

INPUT/OUTPUT INTERFACE 1005

INPUT UNIT 1006

OUTPUT UNIT 1007

STORAGE UNIT 1008

COMMUNICATION UNIT 1009

DRIVE 1010

REMOVABLE STORAGE MEDIUM 1011

**EP 4 123 560 A1**

**INTERNATIONAL SEARCH REPORT**

International application No.

PCT/JP2020/028020

A. CLASSIFICATION OF SUBJECT MATTER
Int. Cl. G06Q50/10(2012.01)i
FI: G06Q50/10

According to International Patent Classification (IPC) or to both national classification and IPC

B. FIELDS SEARCHED

Minimum documentation searched (classification system followed by classification symbols)
Int. Cl. G06Q50/10

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-290571 A (NIPPON TELEGRAPH AND TELEPHONE | 1-2, 17-18 |
| A | CORP.) 10 December 2009, paragraphs [0019]-[0025], [0034]-[0043], [0048], entire text, all drawings | 3-16 |
| A | JP 2015-87986 A (JX NIPPON OIL & ENERGY CORP.) 07 May 2015, entire text, all drawings | 1-18 |
| A | JP 2002-297910 A (AIOI INSURANCE CO., LTD.) 11 October 2002, entire text, all drawings | 1-18 |
| A | JP 2004-30190 A (HITACHI, LTD.) 29 January 2004, entire text, all drawings | 1-18 |
| A | US 2012/0115464 A1 (SAMSUNG ELECTRONICS CO., LTD.) 10 May 2012, entire text, all drawings | 1-18 |

☐ Further documents are listed in the continuation of Box C.      ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 16.10.2020 | 27.10.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

Information on patent family members

| International application No. |
| --- |
| PCT/JP2020/028020 |

| Patent Documents referred to in the Report | Publication Date | Patent Family | Publication Date |
| --- | --- | --- | --- |
| JP 2009-290571 A | 10.12.2009 | (Family: none) | |
| JP 2015-87986 A | 07.05.2015 | (Family: none) | |
| JP 2002-297910 A | 11.10.2002 | (Family: none) | |
| JP 2004-30190 A | 29.01.2004 | (Family: none) | |
| US 2012/0115464 A1 | 10.05.2012 | KR 10-2012-0047450 A entire text, all drawings | |

Form PCT/ISA/210 (patent family annex) (January 2015)

**REFERENCES CITED IN THE DESCRIPTION**

**Patent documents cited in the description**

- WO 2014136466 A